# EUROPEAN PATENT APPLICATION

(11) **EP 3 993 120 A1**
(43) Date of publication of application: **04.05.2022**
(21) Application number: 20837815.8
(22) Date of filing: 06.07.2020
(51) Int. Cl.: H01M 10/052, H01M 10/054, H01M 10/0567, H01M 10/0568, H01M 10/0569

(54) **NONAQUEOUS ELECTROLYTE AND NONAQEUOUS ELECTROLYTE SECONDARY BATTERY**

(30) Priority: 09.07.2019 JP 2019127549
(71) Applicant: Central Glass Co., Ltd., Yamaguchi 755-0001 (JP)
(72) Inventor: MORINAKA, Takayoshi, Ube-shi, Yamaguchi 755-0001 (JP); KAWABATA, Wataru, Ube-shi, Yamaguchi 755-0001 (JP); KAWAHARA, Kei, Ube-shi, Yamaguchi 755-0001 (JP); TAKAHASHI, Mikihiro, Ube-shi, Yamaguchi 755-0001 (JP)
(74) Representative: Manitz Finsterwald Patent- und Rechtsanwaltspartnerschaft mbB
(86) International application number: PCT/JP2020/026377
(87) International publication number: WO 2021/006238

(57) **Abstract**

Provided are a nonaqueous electrolyte solution which makes it possible to further improve low temperature characteristics and high temperature storage characteristics; and a nonaqueous electrolyte secondary battery comprising such a nonaqueous electrolyte solution. The present nonaqueous electrolyte solution comprises: (I) a first additive represented by the following formula [1], (II) at least one second additive selected from the group consisting of the compounds represented by the following formulae [2] to [5], difluoro(oxalato)borate, bis(oxalato)borate, tetrafluoro(oxalato)phosphate, difluorobis(oxalato)phosphate, tris(oxalato)phosphate, difluorophosphate, and fluorosulfonate, (III) a nonaqueous organic solvent, and (IV) a solute.

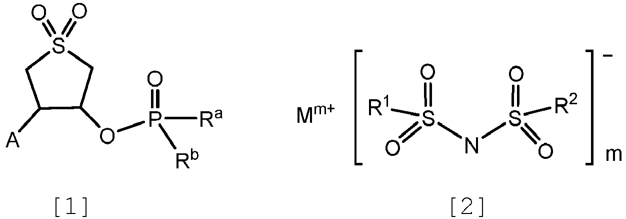

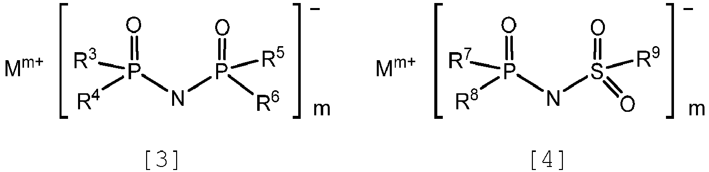

S i (R¹⁰) ₐ (R¹¹) ₄₋ₐ [5]

## Description

### Technical Field

The present invention relates to a nonaqueous electrolyte solution and a nonaqueous electrolyte solution secondary battery provided with the nonaqueous electrolyte solution.

### Background technology

Optimization of various battery components including positive and negative electrode active materials has been studied as a means for improving the durability of nonaqueous electrolyte solution secondary batteries. Nonaqueous electrolyte solutions are not exceptions, and it has been proposed that a solid electrolyte interface (SEI) is formed at the interface between an electrode and an electrolyte solution with the use of various additives, so as to suppress deterioration due to the decomposition of the electrolyte solution on the surface of an active positive or negative electrode.

For example, Patent Literature 1 discloses that when used in a power storage device such as a nonaqueous electrolyte solution secondary battery, an electrolyte solution contains a compound containing a cyclic sulfone group bound to a phosphinyloxy group as an additive in order to improve the battery characteristics in terms of long-term cycle characteristics, resistance characteristics and initial resistance characteristics.

### Citation List

### Patent Literature

Patent Literature 1: WO2018/016195

### Summary of Invention

### Subject to be attained by the invention

Patent Literature 1 discloses an electrolyte solution that exhibits an effect of improving battery characteristics in terms of cycle characteristics, resistance characteristics and initial resistance characteristics at 25°C when used in a power storage device such as a nonaqueous electrolyte solution secondary battery. However, it has been desired to have further improved long-term high-temperature storage characteristics and low-temperature characteristics in a temperature environment widely ranging from - 40°C to + 80°C, as is required for in-vehicle batteries and large scale stationary batteries.

Therefore, the subject to be attained by the present invention is to provide a nonaqueous electrolyte solution capable of further improving high-temperature storage characteristics and low-temperature characteristics as well as a nonaqueous electrolyte solution secondary battery comprising the nonaqueous electrolyte solution.

### Means for attaining the subject to be attained by the invention

As a result of intensive studies in view of such a subject, the present inventors have discovered that a nonaqueous electrolyte solution containing a nonaqueous organic solvent and a solute is prepared to further comprise a first additive that is a compound containing a cyclic sulfone group bound to a phosphinyloxy group and the specific second additive, so that high temperature storage characteristics and low temperature characteristics can be further improved when the electrolyte solution is used in a nonaqueous electrolyte solution secondary battery.

Specifically, the present invention relates to a nonaqueous electrolyte solution characterized by comprising:
(I) a first additive represented by the following general formula [1],
(II) at least one second additive selected from the group consisting of the compounds represented by the following general formulae [2] to [5], difluoro(oxalato)borate, bis(oxalato)borate, tetrafluoro(oxalato)phosphate, difluorobis(oxalato)phosphate, tris(oxalato)phosphate, difluorophosphate and fluorosulfonate,
(III) a nonaqueous organic solvent, and
(IV) a solute, 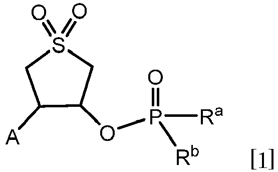
[in the formula [1],
R^{a} and R^{b} each independently represents a fluorine atom, a C₁₋₈ alkyl group which may be replaced with a halogen atom, a C₂₋₆ alkenyl group which may be replaced with a halogen atom, a C₂₋₆ alkynyl group which may be replaced with a halogen atom, a C₆₋₁₀ aryl group which may be replaced with a halogen atom, a C₁₋₈ alkoxy group which may be replaced with a halogen atom, a C₂₋₆ alkenyloxy group which may be replaced with a halogen atom, a C₂₋₆ alkynyloxy group which may be replaced with a halogen atom, or a C₆₋₁₀ aryloxy group which may be replaced with a halogen atom, and

A represents a hydrogen atom or a halogen atom.

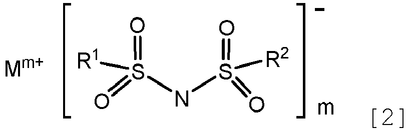

[In the formula [2],
R¹ and R² each independently represents a fluorine atom or an organic group selected from a linear C₁₋₁₀ alkyl group or a branched C₃₋₁₀ alkyl group, a linear C₁₋₁₀ alkoxyl group or a branched C₃₋₁₀ alkoxy group, a C₂₋₁₀ alkenyl group, a C₂₋₁₀ alkenyloxy group, a C₂₋₁₀ alkynyl group, a C₂₋₁₀ alkynyloxy group, a C₃₋₁₀ cycloalkyl group, a C₃₋₁₀ cycloalkoxy group, a C₃₋₁₀ cycloalkenyl group, a C₃₋₁₀ cycloalkenyloxy group, a C₆₋₁₀ aryl group, and a C₆₋₁₀ aryloxy group, wherein a fluorine atom, an oxygen atom or an unsaturated bond may also be present in the organic group, provided that at least one of R¹ and R² represents a fluorine atom,
M^{m +} represents an alkali metal cation, an alkaline earth metal cation, or an onium cation, and
m is an integer equal to the valence of the relevant cation.]

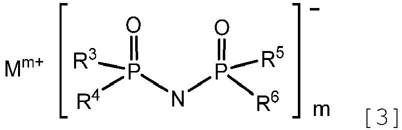

[In the formula [3],
R³ to R⁶ each independently represents a fluorine atom or an organic group selected from a linear C₁₋₁₀ alkyl group or a branched C₃₋₁₀ alkyl group, a linear C₁₋₁₀ alkoxy group or a branched C₃₋₁₀ alkoxy group, a C₂₋₁₀ alkenyl group, a C₂₋₁₀ alkenyloxy group, a C₂₋₁₀ alkynyl group, a C₂₋₁₀ alkynyloxy group, a C₃₋₁₀ cycloalkyl group, a C₃₋₁₀ cycloalkoxy group, a C₃₋₁₀ cycloalkenyl group, a C₃₋₁₀ cycloalkenyloxy group, a C₆₋₁₀ aryl group, and a C₆₋₁₀ aryloxy group, wherein a fluorine atom, an oxygen atom, a cyano group or an unsaturated bond may also be present in the organic group, provided that at least one of R³ to R⁶ represents a fluorine atom, and
M^{m +} and m represent the same as those in the general formula [2].]

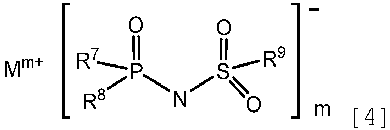

[In the formula [4],
R⁷ to R⁹ each independently represents a fluorine atom or an organic group selected from a linear C₁₋₁₀ alkyl group or a branched C₃₋₁₀ alkyl group, a linear C₁₋₁₀ alkoxy group or a branched C₃₋₁₀ alkoxy group, a C₂₋₁₀ alkenyl group, a C₂₋₁₀ alkenyloxy group, a C₂₋₁₀ alkynyl group, a C₂₋₁₀ alkynyloxy group, a C₃₋₁₀ cycloalkyl group, a C₃₋₁₀ cycloalkoxy group, a C₃₋₁₀ cycloalkenyl group, a C₃₋₁₀ cycloalkenyloxy group, a C₆₋₁₀ aryl group, and a C₆₋₁₀ aryloxy group, wherein a fluorine atom, an oxygen atom or an unsaturated bond may also be present in the organic group, provided at least one of R⁷ to R⁹ represents a fluorine atom and
M^{m +} and m represent the same as those in the general formula [2].]

S i (R¹⁰) ₐ (R¹¹) ₄₋ₐ [5]

[In the formula [5],
R¹⁰S each independently represents a group having a carbon-carbon unsaturated bond.
R¹¹S each independently represents a fluorine atom, a linear C₁₋₁₀ alkyl group or a branched C₃₋₁₀ alkyl group which may be replaced with a fluorine atom, and a linear C₁₋₁₀ alkoxy group or a branched C₃₋₁₀ alkoxy group which may be replaced with a fluorine atom, and
a is an integer from 2 to 4.]

While the mechanism of action for improving battery characteristics according to the present invention is unclear, the co-use of the first additive and the second additive is important.

It is inferred that the decomposition products of the first additive and the second additive used together form SEI, and the composite film excellent in permeability for cations such as lithium ions and sodium ions further improves high temperature storage characteristics and low temperature characteristics.

In the above general formula [1], R^{a} and R^{b} each independently represents preferably a fluorine atom, a C₁₋₃ alkoxy group which may be replaced with a halogen atom, a C₂₋₄ alkenyloxy group which may be replaced with a halogen atom, a C₂₋₄ alkynyloxy group which may be replaced with a halogen atom, or a C₆₋₁₀ aryloxy group which may be replaced with a halogen atom.

Further, in the above general formula [1], A preferably represents a hydrogen atom or a fluorine atom.

In the above general formula [2], the presence of an S-F bond can result in excellent low temperature characteristics. Greater number of the S-F bonds is preferable in that the low temperature characteristics can be further improved, and both R¹ and R² represent particularly preferably fluorine atoms in the general formula [2].

Further, it is preferable that in the above general formula [2],

R¹ represents a fluorine atom, and

R² represents a C₆ or less alkyl group, a C6 or less alkenyl group, a C₆ or less alkynyl group, a C6 or less alkoxy group, a C₆ or less alkenyloxy group, or a C₆ or less alkynyloxy group, which may contain a fluorine atom.

Further, it is preferable that in the above general formula [2],
R¹ represents a fluorine atom,
R² represents a group selected from a methyl group, a methoxy group, an ethyl group, an ethoxy group, an n-propyl group, an n-propoxy group, an isopropyl group, an isopropoxy group, a vinyl group, an allyl group, an allyloxy group, an ethynyl group, a 2-propynyl group, a 2-propynyloxy group, a phenyl group, a phenyloxy group, a trifluoromethyl group, a trifluoromethoxy group, a 2,2-difluoroethyl group, a 2,2-difluoroethyloxy group, a 2,2,2-trifluoroethyl group, a 2,2,2-trifluoroethyloxy group, a 2,2,3,3-tetrafluoropropyl group, a 2,2,3,3-tetrafluoropropyloxy group, a 1,1,1,3,3,3-hexafluoroisopropyl group and a 1,1,1,3,3,3-hexafluoroisopropyloxy group.

In the above general formula [3], the presence of a P-F bond can result in excellent low temperature characteristics. Greater number of the P-F bonds is preferable in that the low temperature characteristics can be further improved, and R³ to R⁶ each represents particularly preferably a fluorine atom in the general formula [3].

Further, it is preferable that in the above general formula [3],
at least one of R³ to R⁶ represents a fluorine atom,
at least one of R³ to R⁶ represents a group selected from a C₆ or less alkyl group, a C6 or less alkenyl group, a C₆ or less alkynyl group, a C₆ or less alkoxy group, a C₆ or less alkenyloxy group, and a C₆ or less alkynyloxy group, which may contain a fluorine atom.

Further, it is preferable that in the above general formula [3],
at least one of R³ to R⁶ represents a fluorine atom,
at least one of R³ to R⁶ represents a group selected from a methyl group, a methoxy group, an ethyl group, an ethoxy group, an n-propyl group, an n-propoxy group, an isopropyl group, an isopropoxy group, a vinyl group, an allyl group, an allyloxy group, an ethynyl group, a 2-propynyl group, a 2-propynyloxy group, a phenyl group, a phenyloxy group, a trifluoromethyl group, a trifluoromethoxy group, a 2,2-difluoroethyl group, a 2,2-difluoroethyloxy group, a 2,2,2-trifluoroethyl group, a 2,2,2-trifluoroethyloxy group, a 2,2,3,3-tetrafluoropropyl group, a 2,2,3,3-tetrafluoropropyloxy group, a 1,1,1,3,3,3-hexafluoroisopropyl group and a 1,1,1,3,3,3-hexafluoroisopropyloxy group.

In the above general formula [4], the presence of a P-F bond or an S-F bond can result in excellent low temperature characteristics. Greater number of P-F bonds or S-F bonds is preferable in that the low temperature characteristics can be further improved. In the above general formula [4], R⁷ to R⁹ each represents particularly preferably a fluorine atom.

Further, it is preferable that in the above general formula [4],
at least one of R⁷ to R⁹ represents a fluorine atom,
at least one of R⁷ to R⁹ represents a group selected from a C₆ or less alkyl group, a C₆ or less alkenyl group, a C₆ or less alkynyl group, a C₆ or less alkoxy group, a C₆ or less alkenyloxy group, and a C₆ or less alkynyloxy group, which may contain a fluorine atom.

Further, it is preferable that in the above general formula [4],
at least one of R⁷ to R⁹ represents a fluorine atom,
at least one of R⁷ to R⁹ represents a group selected from a methyl group, a methoxy group, an ethyl group, an ethoxy group, an n-propyl group, an n-propoxy group, an isopropyl group, an isopropoxy group, a vinyl group, an allyl group, an allyloxy group, an ethynyl group, a 2-propynyl group, a 2-propynyloxy group, a phenyl group, a phenyloxy group, a trifluoromethyl group, a trifluoromethoxy group, a 2,2-difluoroethyl group, a 2,2-difluoroethyloxy group, a 2,2,2-trifluoroethyl group, a 2,2,2-trifluoroethyloxy group, a 2,2,3,3-tetrafluoropropyl group, a 2,2,3,3-tetrafluoropropyloxy group, a 1,1,1,3,3,3-hexafluoroisopropyl group and a 1,1,1,3,3,3-hexafluoroisopropyloxy group.

Further, in the above general formulae [2] to [4], M^{m +} is preferably selected from the group consisting of a lithium ion, a sodium ion, a potassium ion and a tetraalkylammonium ion.

In the above general formula [5], R¹⁰S each independently represents preferably a group selected from the group consisting of a vinyl group, an allyl group, a 1-propenyl group, a 2-propenyl group, an ethynyl group, and a 2-propynyl group.

Further, in the above general formula [5], R¹¹s each independently represents preferably a group selected from the group consisting of a fluorine atom, a methyl group, an ethyl group, an n-propyl group, an isopropyl group, a 2,2,2-trifluoroethyl group, a 2,2,3,3-tetrafluoropropyl group, a 1,1,1-trifluoroisopropyl group, a 1,1,1,3,3,3-hexafluoroisopropyl group, a 2,2,2-trifluoroethoxy group, a 2,2,3,3-tetrafluoropropoxy group, a 2,2,3,3,3-pentafluoropropoxy group, a 1,1,1-trifluoroisopropoxy group, and a 1,1,1,3,3,3-hexafluoroisopropoxy group.

Further, in the above general formula [5], a is more preferably 3 or 4, and a is particularly preferably 4.

Further, the counter cations of the above difluoro(oxalato)borate, bis(oxalato)borate, tetrafluoro(oxalato)phosphate, difluorobis(oxalato)phosphate, tris(oxalato)phosphate, difluorophosphate, and fluorosulfonate are preferably groups selected from the group consisting of a lithium ion, a sodium ion, a potassium ion, and a tetraalkylammonium ion.

The content of the fist additive (I) above ranges from preferably 0.01 mass% to 10.0 mass%, more preferably 0.05 mass% to 5.0 mass%, and particularly preferably 0.5 mass% to 2.0 mass% with respect to the total amount of the components (I) to (IV) above.

The content of the second additive (II) above ranges from preferably 0.005 mass% to 12.0 mass%, more preferably 0.05 mass% to 10.0 mass%, and particularly preferably 0.1 mass% to 5.0 mass% with respect to the total amount of the components (I) to (IV) above.

The component (IV) above is preferably at least one selected from the group consisting of LiPF₆, LiBF₄, LiSbF₆, LiAsF₆, LiClO₄, LiCF₃SO₃, LiC₄F₉SO₃, LiAlO₂, LiAlCl₄, LiCl, LiI, NaPF₆, NaBF₄, NaSbF₆, NaAsF₆, NaClO₄, NaCF₃SO₃, NaC₄F₉SO₃, NaAlO₂, NaAlCl₄, NaCl, and NaI.

The component (III) above is preferably at least one selected from the group consisting of a cyclic carbonate, a chain carbonate, a cyclic ester, a chain ester, a cyclic ether, a chain ether, a sulfone compound, a sulfoxide compound, and an ionic liquid. The component (III) above further preferably contains a cyclic carbonate, and particularly preferably contains at least one selected from an ethylene carbonate, a propylene carbonate, a fluoroethylene carbonate, a vinylene carbonate, and a vinyl ethylene carbonate.

The nonaqueous electrolyte solution may further contain at least one additive selected from the group consisting of vinylene carbonate, an oligomer of vinylene carbonate (having a number average molecular weight in terms of polystyrene ranging from 170 to 5000), vinylethylene carbonate, fluoroethylene carbonate, 1,6-diisocyanatohexane, ethynylethylene carbonate, trans-difluoroethylene carbonate, propanesultone, propenesultone, 1,3,2-dioxathiolane-2,2-dioxide, 4-propyl-1,3,2-dioxathiolane-2,2-dioxide, methylenemethanedisulfonate, 1,2-ethanedisulfonic acid anhydride, methanesulfonylfluoride, tris(trimethylsilyl)borate, succinonitrile, (ethoxy)pentafluorocyclotriphosphazene, lithium tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, t-butylbenzene, t-amylbenzene, fluorobenzene, and cyclohexylbenzene.

Further, the present invention relates to a nonaqueous electrolyte solution secondary battery comprising at least a positive electrode, a negative electrode, and the above nonaqueous electrolyte solution.

### Effect of the Invention

According to the present invention, a nonaqueous electrolyte solution capable of further improving high-temperature storage characteristics and low-temperature characteristics, and a nonaqueous electrolyte solution secondary battery comprising the nonaqueous electrolyte solution can be provided.

### Description of Embodiments

Hereinafter, the present invention will be described in detail. However, the technical elements which will be described below are examples of the embodiments of the present invention, and the scope of the present invention is not limited by these specific contents. The present invention can be modified in various ways within the scope of the gist of the present invention.

### 1. Nonaqueous electrolyte solution

The nonaqueous electrolyte solution of the present invention contains the first additive (I) represented by the above general formula [1], at least one second additive (II) selected from the group consisting of the compounds represented by the above general formulae [2] to [5], difluoro (oxalato) borate, bis (oxalato) borate, tetrafluoro (oxalato) phosphate, difluorobis (oxalato) phosphate, tris (oxalato) phosphate, difluorophosphate, and fluorosulfonate, a nonaqueous organic solvent (III), and a solute (IV).

### First additive (I)

It is considered that the compound represented by the above general formula [1] is partially decomposed at the interface between the positive electrode and the electrolyte solution and the interface between the negative electrode and the electrolyte solution, so as to form a film. It is presumed that this film suppresses direct contact between the nonaqueous organic solvent or a solute and an active material, prevents decomposition of the nonaqueous organic solvent or solute, and suppresses deterioration of battery performance.

In this connection, in the present invention, the expression "may be replaced with a halogen atom" means that at least one of hydrogen atoms of an alkyl group or the like as R^{a} or R^{b} may be replaced with a halogen atom.

Examples of the C₁₋₈ alkyl group which may be replaced with a halogen atom as R^{a} and R^{b} in the above general formula [1] include a methyl group, an ethyl group, an n-propyl group, an isopropyl group, an n-butyl group, an isobutyl group, a tert-butyl group, a trifluoromethyl group, and a trifluoroethyl group. Of them, a methyl group is preferable.

Examples of the C₂₋₆ alkenyl group which may be replaced with a halogen atom of R^{a} and R^{b} in the above general formula [1] include a vinyl, an allyl, an isopropenyl, a 1-butenyl, a 2-butenyl, a 3-butenyl, an isobutenyl, and a 1,1-difluoro-1-propenyl. Of them, an allyl group which may be replaced with a halogen atom is preferable.

Examples of the C₂₋₆ alkynyl group which may be replaced with a halogen atom as R^{a} and R^{b} in the above general formula [1] include a 1-propynyl group, a 2-propynyl group, a 1-butynyl group, a 2-butynyl group, and a 3-butynyl group. Of them, a 2-propynyl group which may be replaced with a halogen atom is preferable.

Examples of the C₆₋₁₀ aryl group which may be replaced with a halogen atom as R^{a} and R^{b} in the above general formula [1] include a phenyl group, a tosyl group, a xylyl group, a naphthyl group, a trifluorophenyl group, and a pentafluorophenyl group.

Examples of the C₁₋₈ alkoxy group which may be replaced with a halogen atom as R^{a} and R^{b} in the above general formula [1] include a methoxy group, an ethoxy group, an n-propoxy group, an isopropoxy group, an n-butoxy group, an isobutoxy group, a tert-butoxy group, a trifluoromethoxy group, and a trifluoroethoxy group. Of them, a C₁₋₃ alkoxy group is preferable, and a methoxy group is particularly preferable.

Examples of the C₂₋₆ alkenyloxy group which may be replaced with a halogen atom as R^{a} and R^{b} in the above general formula [1] include an allyloxy group, a 1-methyl-2-propenyloxy group, a 2-methyl-2-propenyloxy group, a 2-butenyloxy group, a 3-butenyloxy group, and a propenyloxy group. Of them, a C₂₋₄ alkenyloxy or allyloxy group is preferable.

Examples of the C₂₋₆ alkynyloxy group which may be replaced with a halogen atom as R^{a} and R^{b} in the above general formula [1] include a 2-propynyloxy group, a 1-methyl-2-propynyloxy group, a 2-methyl-2-propynyloxy group, a 2-butynyloxy group, and a 3-butynyloxy group. Of them, a C₂₋₄ alkynyloxy or 2-propynyloxy group is preferable.

Examples of the C₆₋₁₀ aryloxy group which may be replaced with a halogen atom as R^{a} and R^{b} in the above general formula [1] include a phenoxy group, a 2-methylphenoxy group, a 3-methylphenoxy group, a 4-methylphenoxy group, a 2-ethylphenoxy group, a 3-ethylphenoxy group, a 4-ethylphenoxy group, a 2-methoxyphenoxy group, a 3-methoxyphenoxy group, and a 4-methoxyphenoxy group. Of them, a phenoxy group which may be replaced with a halogen atom is preferable.

As the "halogen atom" as R^{a} and R^{b} in the above general formula [1], a fluorine atom is preferable from the viewpoint of battery resistance.

Further, examples of the "halogen atom" represented by A in the above general formula [1] include a fluorine atom, a bromine atom, and an iodine atom. Of them, a fluorine atom is preferable from the viewpoint of further lowering the battery resistance.

The compound represented by the above general formula [1] can be obtained by using any available raw materials and combining ordinary reactions.

For example, "3-dimethylphosphinyloxytetrahydrothiophene-1,1-dioxide" in which both R^{a} and R^{b} in the above general formula [1] represent methyl groups and A represents a hydrogen atom is obtained by reacting 3-hydroxysulfolane with dimethylphosphinic chloride as described in examples of Patent Literature 1.

3-dimethylphosphinyloxytetrahydrothiophene-1,1-dioxide can be specifically produced as follows.

Pyridine is placed in a flask and 3-hydroxysulfolane is added under an ice bath. Then, dimethylphosphinic chloride is added dropwise under an ice bath, the temperature is raised to 60°C, and then the reaction solution is stirred for 12 hours at 60°C. Subsequently, water is added, and the precipitate is filtered and then washed by repulp washing with methyl tert-butyl ether (MTBE). The resultant crystals are dried so that 3-dimethylphosphinyloxytetrahydrothiophene-1,1-dioxide can be produced.

Examples of the compound represented by the above general formula [1] include 3-(difluorophosphinyloxy) tetrahydrothiophene-1,1-dioxide, 3-dimethylphosphinyloxytetrahydrothiophene-1,1-dioxide, 3-diethylphosphinyloxytetrahydrothiophene-1,1-dioxide, 3-bis-trifluoromethylphosphinyloxytetrahydrothiophene-1,1-dioxide, 3-diphenylphosphinyloxytetrahydrothiophene-1,1-dioxide, 3-bis-allylphosphinyloxytetrahydrothiophene-1,1-dioxide, 3-divinylphosphinyloxytetrahydrothiophene-1,1-dioxide, 3-dipropargylphosphinyloxytetrahydrothiophene-1,1-dioxide, 3-dimethoxyphosphinyloxytetrahydrothiophene-1,1-dioxide, 3-diethoxyphosphinyloxytetrahydrothiophene-1,1-dioxide, 3-diphenoxy phosphinyloxytetrahydrothiophene-1,1-dioxide, 3-bis-trifluoromethoxyphosphinyloxytetrahydrothiophene-1,1-dioxide, 3-bis-allyloxyphosphinyloxytetrahydrothiophene-1,1-dioxide, 3-bis-cyclohexyloxyphosphinyloxytetrahydrothiophene-1,1-dioxide, 3-dimethylphosphinyloxy-4-fluorotetrahydrothiophene-1,1-dioxide, 3-diethylphosphinyloxy-4-fluorotetrahydrothiophene-1,1-dioxide, 3-bis-trifluoromethylphosphinyloxy-4-fluorotetrahydrothiophene-1,1-dioxide, 3-diphenylphosphinyloxy-4-fluorotetrahydrothiophene-1,1-dioxide, 3-diallylphosphinyloxy-4-fluorotetrahydrothiophene-1,1-dioxide, 3-divinylphosphinyloxy-4-fluorotetrahydrothiophene-1,1-dioxide, 3-dipropargylphosphinyloxy-4-fluorotetrahydrothiophene-1,1-dioxide, 3-dimethoxyphosphinyloxy-4-fluorotetrahydrothiophene-1,1-dioxide, 3-diethoxyphosphinyloxy-4-fluorotetrahydrothiophene-1,1-dioxide, 3-diphenoxyphosphinyloxy-4-fluorotetrahydrothiophene-1,1-dioxide, 3-bis-trifluoromethoxy-4-fluorophosphinyloxytetrahydrothiophene-1,1-dioxide, 3-bis-allyloxy-4-fluorophosphinyloxytetrahydrothiophene-1,1-dioxide, and 3-bis-cyclohexyloxyphosphinyloxy-4-fluorotetrahydrothiophene-1,1-dioxide.

Of them, at least one compound selected from the group consisting of 3-(difluorophosphinyloxy) tetrahydrothiophene-1,1-dioxide, 3-dimethylphosphinyloxytetrahydrothiophene-1,1-dioxide, 3-diphenylphosphinyloxytetrahydrothiophene-1,1-dioxide, 3-dimethoxyphosphinyloxytetrahydrothiophene-1,1-dioxide, 3-bis-allyloxyphosphinyloxytetrahydrothiophene-1,1-dioxide, 3-diphenoxyphosphinyloxytetrahydrothiophene-1,1-dioxide, 3-dimethoxyphosphinyloxy-4-fluorotetrahydrothiophene-1,1-dioxide, 3-bis-allyloxy-4-fluorophosphinyloxytetrahydrothiophene-1,1-dioxide, and 3-dipropargylphosphinyloxytetrahydrothiophene-1,1-dioxide is preferably contained from the viewpoint of further suppressing the initial resistance.

The preferable content of the above component (I) with respect to the total amount of the above components (I) to (IV) is 0.01 mass% as the lower limit and 10.0 mass% as the upper limit. When the content is 0.01 mass% or more, the effect of suppressing deterioration of battery performance is likely to be exhibited, and when the content is 10.0 mass% or less, decreased efficiency of charging/discharging of the battery due to excessive film formation is unlikely to occur. The content ranges more preferably from 0.05 mass% to 5.0 mass%, and particularly preferably from 0.5 mass% to 2.0 mass%.

### Second additive (II)

It is considered that the second additive partially decomposes at the interface between the positive electrode and the electrolyte solution and the interface between the negative electrode and the electrolyte solution, so as to form a relatively thin film. It is inferred that the combined use of the first additive(s) and the second additive(s) leads to the formation of the composite film having excellent permeability for cations such as a lithium ion and a sodium ion, resulting in improved high temperature storage characteristics and low temperature characteristics.

### [Compound represented by the general formula [2] ]

In the above general formula [2], it is important that at least one of R¹ and R² is a fluorine atom. While the reason is unclear, when at least one of R¹ and R² is a fluorine atom, the effect of suppressing the internal resistance of the battery using the electrolyte solution is great.

Fluorine atoms, oxygen atoms or unsaturated bonds may also be present in the organic groups represented by R¹ and R².

In the present invention, "a fluorine atom is present in an organic group" means that at least one of hydrogen atoms of the organic group is replaced with a fluorine atom.

The expression "an oxygen atom is present in an organic group" means that an oxygen atom is contained in at least one carbon-carbon bond of the organic group.

The expression "an unsaturated bond is present in an organic group" means that at least one carbon-carbon bond of the organic group is an unsaturated bond.

In the above general formula [2], examples of the linear C₁₋₁₀ alkyl group or the branched C₃₋₁₀ alkyl group represented as R¹ or R² include a methyl group, an ethyl group, an n-propyl group, an isopropyl group, an n-butyl group, an isobutyl group, a tert-butyl group, a pentyl group, a trifluoromethyl group, a 2,2-difluoroethyl group, a 2,2,2-trifluoroethyl group, a 1,1,2,2,2-pentafluoroethyl group, a 2,2,3,3-tetrafluoropropyl group, and a 1,1,1,3,3,3-hexafluoroisopropyl group. Of them, a methyl group, a trifluoromethyl group, a 2,2,2-trifluoroethyl group and a 1,1,2,2,2-pentafluoroethyl group are preferable.

Examples of the linear C₁₋₁₀ alkoxy group or the branched C₃₋₁₀ alkoxy group include a methoxy group, an ethoxy group, an n-propoxy group, an isopropoxy group, an n-butoxy group, an isobutoxy group, a tert-butoxy group, a pentyroxy group, a 2,2-difluoroethoxy group, a 2,2,2-trifluoroethoxy group, a 2,2,3,3-tetrafluoropropoxy group, and a 1,1,1,3,3,3-hexafluoroisopropoxy group. Of them, a methoxy group, a 2,2-difluoroethoxy group, a 2,2,2-trifluoroethoxy group, a 2,2,3,3-tetrafluoropropoxy group, and a 1,1,1,3,3,3-hexafluoroisopropoxy group are preferable.

Examples of the C₂₋₁₀ alkenyl group include a vinyl group, an allyl group, a 1-propenyl group, an isopropenyl group, a 2-butenyl group, and a 1,3-butadienyl group. Of them, a vinyl group is preferable.

Examples of the C₂₋₁₀ alkenyloxy group include a vinyloxy group, an allyloxy group, a 1-propenyloxy group, an isopropenyloxy group, a 2-butenyloxy group, and a 1,3-butadienyloxy group. Of these, an allyloxy group is preferable.

Examples of the C₂₋₁₀ alkynyl group include an ethynyl group, a 2-propynyl group, and a 1,1-dimethyl-2-propynyl group.

Examples of the C₂₋₁₀ alkynyloxy group include an ethynyloxy group, a 2-propynyloxy group, and a 1,1-dimethyl-2-propynyloxy group. Of them, a 2-propynyloxy group is preferable.

Examples of the C₃₋₁₀ cycloalkyl group include a cyclopentyl group and a cyclohexyl group.

Examples of the C₃₋₁₀ cycloalkoxy group include a cyclopentyloxy group and a cyclohexyloxy group.

Examples of the C₃₋₁₀ cycloalkenyl group include a cyclopentenyl group and a cyclohexenyl group.

Examples of the C₃₋₁₀ cycloalkenyloxy group include a cyclopentenyloxy group and a cyclohexenyloxy group.

Examples of the C₆₋₁₀ aryl group include a phenyl group, a 2-fluorophenyl group, a pentafluorophenyl group, a tolyl group and a xylyl group. Of these, a phenyl group, a 2-fluorophenyl group, and a pentafluorophenyl group are preferable.

Examples of the C₆₋₁₀ aryloxy group include a phenyloxy group, a 2-fluorophenyloxy group, a pentafluorophenyloxy group, a tolyloxy group, and a xylyloxy group. Of them, a phenyloxy group is preferable.

More specific examples of the anion of the compound represented by the above general formula [2] include the following Compound Nos. 2-1 to 2-17. However, the scope of the compound represented by the general formula [2] used in the present invention is not limited by the following examples.

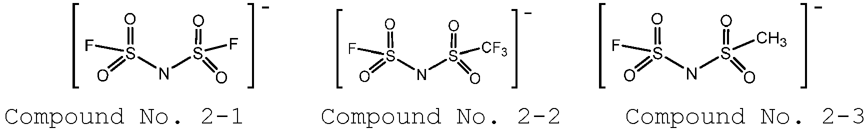

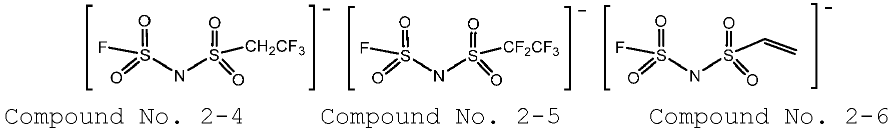

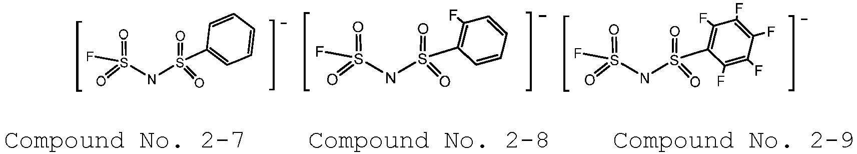

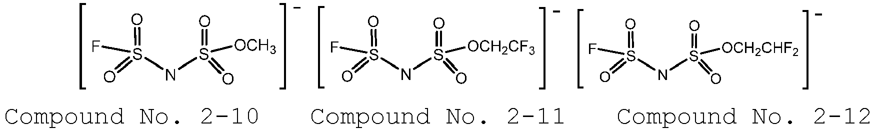

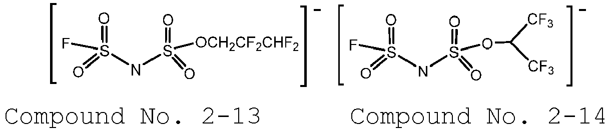

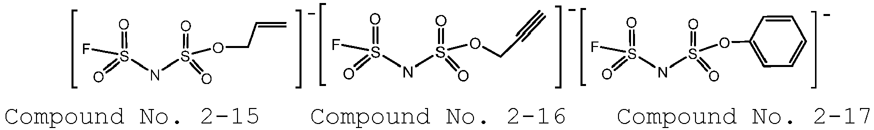

In the above general formula [2], for example, when R¹ represents a fluorine atom and R² represents a group other than a fluorine atom, the group other than the fluorine atom is preferably a group selected from C₆ or less hydrocarbon groups which may contain a fluorine atom. When the number of carbon atoms of the hydrocarbon group is more than 6, the internal resistance upon the formation of a film on an electrode tends to be relatively large. When the number of carbon atoms is 6 or less, the above internal resistance tends to be smaller, and thus such number is preferable. Particularly preferable examples of the C₆ or less hydrocarbon group include a methyl group, an ethyl group, an n-propyl group, a vinyl group, an allyl group, an ethynyl group, a 2-propynyl group, a phenyl group, a trifluoromethyl group, a 2,2-difluoroethyl group, a 2,2,2-trifluoroethyl group, a 2,2,3,3-tetrafluoropropyl group, and a 1,1,1,3,3,3-a hexafluoroisopropyl group, and an alkoxy group, an alkenyloxy group, and an alkynyloxy group derived from these groups, since the resultant nonaqueous electrolyte solution secondary battery is capable of exhibiting cycle characteristics and internal resistance characteristics in a well-balanced manner.

As an anion of the compound represented by the above general formula [2], among Compound Nos. 2-1 to 2-17, Compound Nos. 2-1, 2-2, 2-3, 2-6, 2-10, 2-11, 2-14 and 2-16 are more preferable from the viewpoint of suppressing an increase in internal resistance, and Compound Nos. 2-1, 2-2, 2-6 and 2-10 are particularly preferable.

The compound represented by the above general formula [2] is preferably highly purified by a general purification operation. In particular, the Cl (chlorine) content of the compound as a raw material before being dissolved in an electrolyte solution is preferably 5000 mass ppm or less, more preferably 1000 mass ppm or less, and further preferably 100 mass ppm or less. The use of a salt having an imide anion in which Cl (chlorine) remains at a high concentration is not preferable because it tends to corrode the battery members.

Similarly, the free acid content of the compound as a raw material before being dissolved in an electrolyte solution is preferably 5000 mass ppm or less, more preferably 1000 mass ppm or less, still more preferably 100 mass ppm or less. The use of a salt having an imide anion in which a free acid remains at a high concentration is not preferable because it tends to corrode the battery members. In this connection, in the present specification, a free acid refers to an acid component present in a solution, and examples thereof include hydrogen fluoride (HF), sulfuric acid, and fluorosulfonic acid.

Purification operation may be carried out in order to obtain a high-purity compound represented by the above general formula [2] or to bring the chlorine or free acid content into the above range.

The purification operation is not particularly limited so long as it is general operation in organic syntheses, and specific examples thereof can include washing, separation, concentration, distillation, recrystallization, activated carbon treatment, and column chromatography.

The compound represented by the above general formula [2] can be produced by various methods. The production method is not limited, and the compound can be obtained by, for example, the following method:
a method comprising reacting a corresponding sulfonylamide (H₂NSO₂R¹) with a corresponding sulfonyl halide (R²SO₂X; X is a halogen atom) in the presence of an organic or inorganic base; and
as disclosed in JP-A-2004-522681, a method comprising obtaining by the above method a salt having an imide anion in which an atom at the fluorine atom site of the corresponding salt having an imide anion is a halogen atom other than a fluorine atom, followed by fluorination of the salt.

### [Compound represented by the general formula [3]]

In the above general formula [3], it is important that at least one of R³ to R⁶ is a fluorine atom. While the reason is unclear, when at least one of R³ to R⁶ is a fluorine atom, the effect of suppressing the internal resistance of the battery using the electrolyte solution is great.

A fluorine atom, an oxygen atom, a cyano group or an unsaturated bond may also be present in the organic groups represented as R³ to R⁶.

In the present invention, the expression "a cyano group is present in an organic group" means that at least one of the hydrogen atoms of the organic group is replaced with a cyano group.

In the above general formula [3], examples of the linear C₁₋₁₀ alkyl group or the branched C₃₋₁₀ alkyl group represented by R³ to R⁶ include a methyl group, an ethyl group, an n-propyl group, an isopropyl group, a n-butyl group, an isobutyl group, a tert-butyl group, a pentyl group, a 2,2-difluoroethyl group, a 2,2,2-trifluoroethyl group, a 1,1,2,2,2-pentafluoroethyl group, a 2,2,3,3-tetrafluoropropyl group, and a 1,1,1,3,3,3-hexafluoroisopropyl group.

Examples of the linear C₁₋₁₀ alkoxy group or the branched C₃₋₁₀ alkoxy group include a methoxy group, an ethoxy group, an n-propoxy group, an isopropoxy group, an n-butoxy group, an isobutoxy group, a tert-butoxy group, a pentyloxy group, a 2,2-difluoroethoxy group, a 2,2,2-trifluoroethoxy group, a 2,2,3,3-tetrafluoropropoxy group, a 1,1,1,3,3,3-a hexafluoroisopropoxy group and a 2-cyanoethoxy group. Of them, a methoxy group, a 2,2-difluoroethoxy group, a 2,2,2-trifluoroethoxy group, a 1,1,1,3,3,3-hexafluoroisopropoxy group and a 2-cyanoethoxy group are preferable.

Examples of the C₂₋₁₀ alkenyl group include a vinyl group, an allyl group, a 1-propenyl group, an isopropenyl group, a 2-butenyl group, and a 1,3-butadienyl group.

Examples of the C₂₋₁₀ alkenyloxy group include a vinyloxy group, an allyloxy group, a 1-propenyloxy group, an isopropenyloxy group, a 2-butenyloxy group, and a 1,3-butadienyloxy group. Of them, an allyloxy group is preferable.

Examples of the C₂₋₁₀ alkynyl group include an ethynyl group, a 2-propynyl group, and a 1,1-dimethyl-2-propynyl group.

Examples of the C₂₋₁₀ alkynyloxy group include an ethynyloxy group, a 2-propynyloxy group and a 1,1-dimethyl-2-propynyloxy group. Of them, a 2-propynyloxy group is preferable.

Examples of the C₃₋₁₀ cycloalkyl group include a cyclopentyl group and a cyclohexyl group.

Examples of the C₃₋₁₀ cycloalkoxy group include a cyclopentyloxy group and a cyclohexyloxy group.

Examples of the C₃₋₁₀ cycloalkenyl group include a cyclopentenyl group and a cyclohexenyl group.

Examples of the C₃₋₁₀ cycloalkenyloxy group include a cyclopentenyloxy group and a cyclohexenyloxy group.

Examples of the C₆₋₁₀ aryl group include a phenyl group, a 2-fluorophenyl group, a pentafluorophenyl group, a tolyl group, and a xylyl group.

Examples of the C₆₋₁₀ aryloxy group include a phenyloxy group, a 2-fluorophenyloxy group, a pentafluorophenyloxy group, a tolyloxy group, and a xylyloxy group. Of them, a phenyloxy group is preferable.

More specific examples of the anion of the compound represented by the above general formula [3] include the following Compound Nos. 3-1 to 3-13. However, the compounds represented by the general formula [3] used in the present invention are not limited by the following examples. In the formula, Me represents a methyl group.

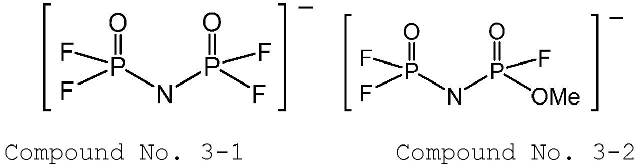

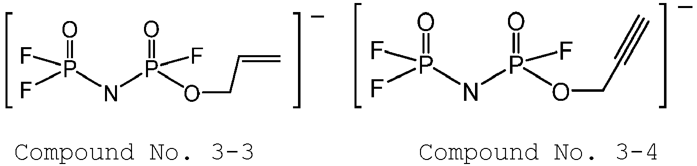

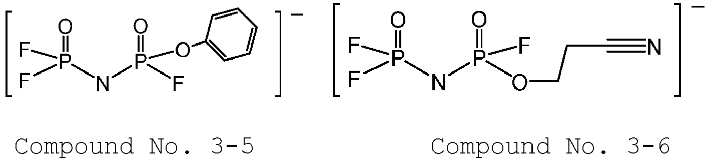

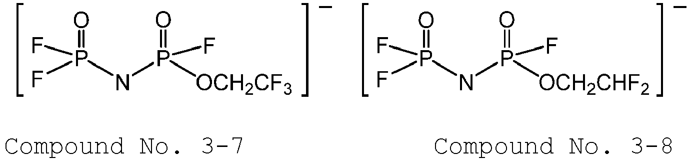

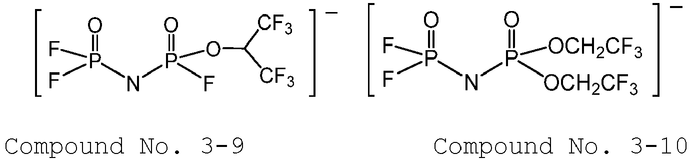

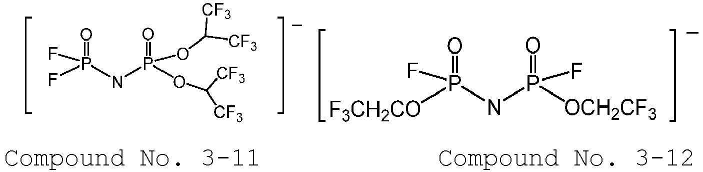

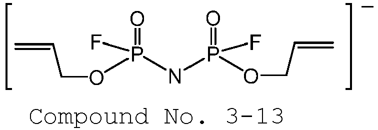

In the above general formula [3], at least one of R³ to R⁶ represents preferably a fluorine atom, and at least one of R³ to R⁶ represents preferably a group selected from C₆ or less hydrocarbon groups which may contain a fluorine atom. When the number of carbon atoms of the hydrocarbon group is more than 6, the internal resistance upon the formation of a film on an electrode tends to be relatively large. When the number of carbon atoms is 6 or less, the above internal resistance tends to be smaller and thus this is preferable. In particular, at least one group selected from a methyl group, an ethyl group, an n-propyl group, a vinyl group, an allyl group, an ethynyl group, a 2-propynyl group, a phenyl group, a trifluoromethyl group, a 2,2-difluoroethyl group, a 2,2,2-trifluoroethyl group, a 2,2,3,3-tetrafluoropropyl group, a 1,1,1,3,3,3-hexafluoroisopropyl group, and groups derived from those groups including an alkoxy group, an alkenyloxy group and an alkynyloxy group are preferable because the resulting nonaqueous electrolyte solution secondary battery is capable of exhibiting cycle characteristics and internal resistance characteristics in a well-balanced manner.

As an anion of the compound represented by the above general formula [3], among Compound Nos. 3-1 to 3-13, Compound Nos. 3-1, 3-2, 3-3, 3-4, 3-6, 3-7, 3-9 and 3-13 are more preferable from the viewpoint of suppressing an increase in internal resistance, and Compound Nos. 3-1, 3-2, 3-4 and 3-9 are particularly preferable.

The compound represented by the above general formula [3] is preferably highly purified by general purification operation. In particular, the Cl (chlorine) content of the compound as a raw material before being dissolved in an electrolyte solution is preferably 5000 mass ppm or less, more preferably 1000 mass ppm or less, and still more preferably 100 mass ppm or less. The use of a salt having an imide anion in which Cl (chlorine) remains at a high concentration is not preferable in that it tends to corrode the battery members.

Similarly, the free acid content of the compound as a raw material before being dissolved in an electrolyte solution is preferably 5000 mass ppm or less, more preferably 1000 mass ppm or less, and still more preferably 100 mass ppm or less. The use of a salt having an imide anion in which a free acid remains at a high concentration is not preferable in that it tends to corrode the battery members.

Purification operation can be carried out in order to obtain a high-purity compound represented by the above general formula [3], or to bring the chlorine or free acid content into the above range.

The purification operation is not particularly limited so long as it is general operation in organic syntheses, and specific examples thereof can include washing, separation, concentration, distillation, activated carbon treatment, and column chromatography.

The compound represented by the above general formula [3] can be produced by various methods. The production method is not limited, but the compound can be obtained by, for example, the following methods:
a method comprising reacting a corresponding phosphoric amide (H₂NP (=O) R³R⁴) with a corresponding phosphoryl halide (R⁵R⁶P(=O)X; X is a halogen atom) in the presence of an organic or inorganic base;
as described in Z.anorg.allg.chem., 621, 894-900, 1995, a method comprising obtaining by the above method a salt having an imide anion in which an atom at the fluorine atom site of the corresponding salt having an imide anion is a halogen atom other than a fluorine atom, followed by fluorination of the salt; and
when a part of R³ to R⁶ contains an alkoxy group, a method comprising obtaining an imide anion in which R³ to R⁶ are halogen atoms, and then reacting it with a corresponding alcohol in the presence of an inorganic or organic base.

### [Compound represented by the general formula [4]]

In the above general formula [4], it is important that at least one of R⁷ to R⁹ represents a fluorine atom. While the reason is unclear, when at least one of R⁷ to R⁹ represents a fluorine atom, the effect of suppressing the internal resistance of the battery using the electrolyte solution is great.

A fluorine atom, an oxygen atom or an unsaturated bond may also be present in the organic groups represented by R⁷ to R⁹.

Further, in the above general formula [4], examples of the C₁₋₁₀ linear alkyl group or the branched C₃₋₁₀ alkyl group represented by R⁷ to R⁹ include a methyl group, an ethyl group, an n-propyl group, an isopropyl group, an n-butyl group, an isobutyl group, a tert-butyl group, a pentyl group, a trifluoromethyl group, a 2,2-difluoroethyl group, a 2,2,2-trifluoroethyl group, a 1,1,2,2,2-pentafluoroethyl group, a 2,2,3,3-tetrafluoropropyl group, and a 1,1,1,3,3,3-hexafluoroisopropyl group. Of them, a methyl group and a trifluoromethyl group are preferable.

Examples of the linear C₁₋₁₀ alkoxy group or the branched C₃₋₁₀ alkoxy group include a methoxy group, an ethoxy group, an n-propoxy group, an isopropoxy group, an n-butoxy, an isobutoxy group, a tert-butoxy group, a pentyloxy group, a 2,2-difluoroethoxy group, a 2,2,2-trifluoroethoxy group, a 2,2,3,3-tetrafluoropropoxy group and a 1,1,1,3,3,3-hexafluoroisopropoxy group. Of them, a methoxy group, an ethoxy group, a 2,2,2-trifluoroethoxy group and a 1,1,1,3,3,3-hexafluoroisopropoxy group are preferable.

Examples of the C₂₋₁₀ alkenyl group include a vinyl group, an allyl group, a 1-propenyl group, an isopropenyl group, a 2-butenyl group, and a 1,3-butadienyl group. Of them, a vinyl group is preferable.

Examples of the C₂₋₁₀ alkenyloxy group include a vinyloxy group, an allyloxy group, a 1-propenyloxy group, an isopropenyloxy group, a 2-butenyloxy group, and a 1,3-butadienyloxy group. Of them, an allyloxy group is preferable.

Examples of the C₂₋₁₀ alkynyl group include an ethynyl group, a 2-propynyl group, and a 1,1-dimethyl-2-propynyl group.

Examples of the C₂₋₁₀ alkynyloxy group include an ethynyloxy group, a 2-propynyloxy group, and a 1,1-dimethyl-2-propynyloxy group. Of them, a 2-propynyloxy group is preferable.

Examples of the C₃₋₁₀ cycloalkyl group include a cyclopentyl group and a cyclohexyl group.

Examples of the C₃₋₁₀ cycloalkoxy group include a cyclopentyloxy group and a cyclohexyloxy group.

Examples of the C₃₋₁₀ cycloalkenyl group include a cyclopentenyl group and a cyclohexenyl group.

Examples of the C₃₋₁₀ cycloalkenyloxy group include a cyclopentenyloxy group and a cyclohexenyloxy group.

Examples of the C₆₋₁₀ aryl group include a phenyl group, a 2-fluorophenyl group, a pentafluorophenyl group, a tolyl group, and a xylyl group.

Examples of the C₆₋₁₀ aryloxy group include a phenyloxy group, a 2-fluorophenyloxy group, a pentafluorophenyloxy group, a tolyloxy group, and a xylyloxy group. Of them, a phenyloxy group and a tolyloxy group are preferable.

More specific examples of the anion of the compound represented by the above general formula [4] include the following Compound Nos. 4-1 to No. 4-18. However, the compound represented by the general formula [4] used in the present invention is not limited by the following examples. In the formula, Me represents a methyl group and Et represents an ethyl group.

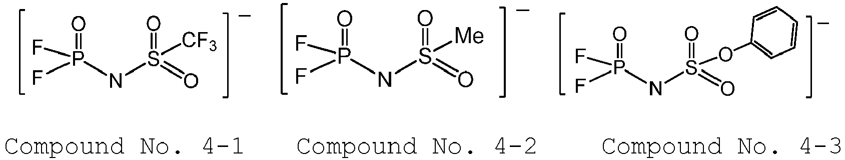

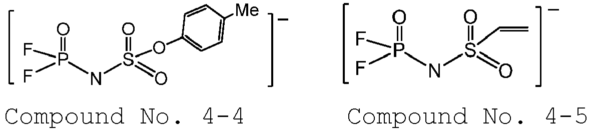

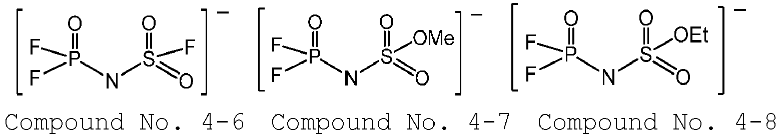

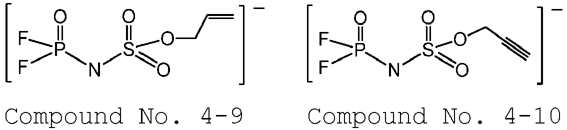

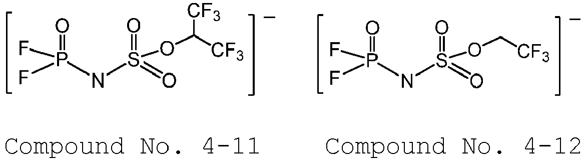

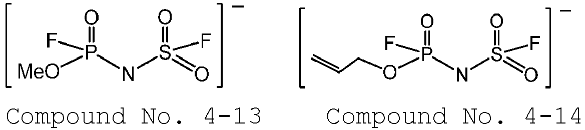

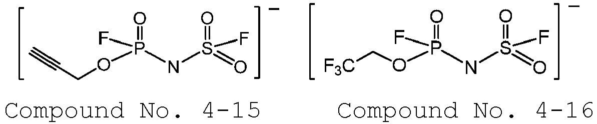

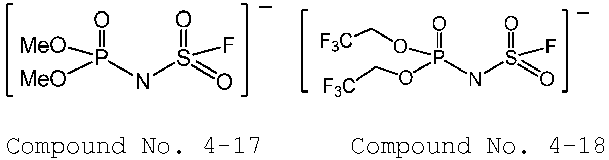

In the above general formula [4], at least one of R⁷ to R⁹ represents preferably a fluorine atom, and at least one of R⁷ to R⁹ represents preferably a group selected from C₆ or less hydrocarbon groups which may contain a fluorine atom. When the number of carbon atoms of the hydrocarbon group is more than 6, the internal resistance upon the formation of a film on an electrode tends to be relatively large. When the number of carbon atoms is 6 or less, the above internal resistance tends to be smaller and such number is preferable. In particular, at least one group selected from a methyl group, an ethyl group, an n-propyl group, a vinyl group, an allyl group, an ethynyl group, a 2-propynyl group, a phenyl group, a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group, and an alkoxy group, an alkenyloxy group and an alkynyloxy group derived from these groups is preferable in that the resultant nonaqueous electrolyte solution secondary battery is capable of exhibiting cycle characteristics and internal resistance characteristics in a well-balanced manner.

As an anion of the compound represented by the above general formula [4], among Compound Nos. 4-1 to 4-18, Compound Nos. 4-1 and 4-2, 4-3, 4-5, 4-6, 4-7, 4-10, 4-11, 4-15, 4-17 and 4-18 are more preferable from the viewpoint of suppressing an increase in internal resistance, and Compound Nos. 4-1, 4-2, 4-5, 4-6, 4-7, 4-15 and 4-18 are particularly preferable.

The compound represented by the above general formula [4] is preferably highly purified by general purification operation. In particular, the Cl (chlorine) content of the compound as a raw material before being dissolved in an electrolyte solution is preferably 5000 mass ppm or less, more preferably 1000 mass ppm or less, and still more preferably 100 mass ppm or less. The use of a salt having an imide anion in which Cl (chlorine) remains at a high concentration is not preferable in that it tends to corrode the battery members.

Similarly, the free acid content of the compound as a raw material before being dissolved in an electrolyte solution is preferably 5000 mass ppm or less, more preferably 1000 mass ppm or less, and still more preferably 100 mass ppm or less. The use of a salt having an imide anion in which a free acid remains at a high concentration is not preferable in that it tends to corrode the battery members.

Purification operation can be carried out in order to obtain a high-purity compound represented by the above general formula [4] or to bring the chlorine or free acid content into the above range.

The purification operation is not particularly limited so long as it is general operation in organic syntheses, and specific examples thereof can include washing, separation, concentration, distillation, activated carbon treatment, and column chromatography.

The compound represented by the above general formula [4] can be produced by various methods. The production method is not limited, but can be obtained by, for example, any of the following methods:
a method comprising reacting a corresponding phosphoric amide (H₂NP (= O) R⁷R⁸) with a corresponding sulfonyl halide (R⁹ SO₂X; X is a halogen atom) in the presence of an organic or inorganic base;
a method comprising reacting a corresponding sulfonylamide (H₂NSO₂R⁹) with a corresponding phosphoryl halide (R⁷R⁸P(= O)X; X is a halogen atom) in the presence of an organic or inorganic base; and
as disclosed in Chinese Patent Application Publication No. 101654229 or Chinese Patent Application Publication No. 1026174414, a method comprising obtaining by the above method a compound in which an atom at the fluorine atom site of the corresponding compound is a halogen atom other than a fluorine atom, followed by fluorination of the compound.

Further, in the above general formulae [2] to [4], M^{m +} is preferably selected from the group consisting of a lithium ion, a sodium ion, a potassium ion and a tetraalkylammonium ion, and a lithium ion or a sodium ion is more preferable, and a lithium ion is particularly preferable.

### [Compound represented by the general formula [5]]

In the above general formula [5], examples of the group having a carbon-carbon unsaturated bond represented by R¹⁰ include C₂₋₈ alkenyl groups such as a vinyl group, an allyl group, a 1-propenyl group, a 2-propenyl group, an isopropenyl group, a 2-butenyl group, and a 1,3-butadienyl group or an alkenyloxy group derived from these groups, C₂₋₈ alkynyl groups such as an ethynyl group, a 2-propynyl group, and a 1,1-dimethyl-2-propynyl group or an alkynyloxy group derived from these groups, and C₆₋₁₂ aryl groups such as a phenyl group, a tolyl group, and a xylyl group, or an aryloxy derived from these groups. Further, the above groups may have a fluorine atom and an oxygen atom. The expression "having a fluorine atom" means that a hydrogen atom bound to a carbon atom has been replaced with a fluorine atom, and the expression "having an oxygen atom" means that an oxygen atom exists as an ether bond in a carbon-carbon bond.

Of them, a C₆ or less group containing a carbon-carbon unsaturated bond is preferable. When the number of carbon atoms is more than 6, the internal resistance upon the formation of a film on an electrode tends to be relatively large. A C₆ or less group containing a carbon-carbon unsaturated bond is preferable in that the above-mentioned internal resistance tends to be smaller. Specifically, a group selected from the group consisting of a vinyl group, an allyl group, a 1-propenyl group, a 2-propenyl group, an ethynyl group, and a 2-propynyl group is preferable, and a vinyl group is particularly preferable.

Further, in the above general formula [5], examples of the alkyl group represented by R¹¹ include C₁₋₁₀ alkyl groups such as a methyl group, an ethyl group, an n-propyl group, an isopropyl group, an n-butyl group, a sec-butyl group, an isobutyl group, a tert-butyl group and a pentyl group. Further, the above group may have a fluorine atom and an oxygen atom. Examples of the group having an oxygen atom include an alkoxy group derived from the above alkyl group. The use of a group selected from an alkyl group and an alkoxy group tends to have a smaller resistance upon the formation of a film on an electrode, and as a result, such a group is preferable from the viewpoint of output characteristics. In particular, a group selected from the group consisting of a methyl group, an ethyl group, an n-propyl group, a 2,2,2-trifluoroethyl group, a 2,2,3,3-tetrafluoropropyl group, a 1,1,1-trifluoroisopropyl group, a 1,1,1,3,3,3-hexafluoroisopropyl group, a 2,2,2-trifluoroethoxy group, 2,2,3,3-tetrafluoropropoxy group, a 2,2,3,3,3-pentafluoropropoxy group, a 1,1,1-trifluoroisopropoxy group, and a 1,1,1,3,3,3-hexafluoroisopropoxy group is preferable in that a nonaqueous electrolyte solution battery having better high temperature cycle characteristics and high temperature storage characteristics can be obtained without increasing the internal resistance upon the formation of a film on an electrode.

The number of groups having carbon-carbon unsaturated bonds, which is represented by a in the above general formula [5], should be an integer from 2 to 4 in order to form a film on an electrode and thus to achieve the object of the present invention and is preferably 3 or 4, particularly preferably 4, in that the high temperature cycle characteristics and the high temperature storage characteristics can be more easily improved. While details are unknown, it can be considered that this is because a stronger film can be formed more easily.

More specific examples of the compound represented by the above general formula [5] include the following Compound Nos. 5-1 to 5-20. However, the silane compound used in the present invention is not limited by the following examples.

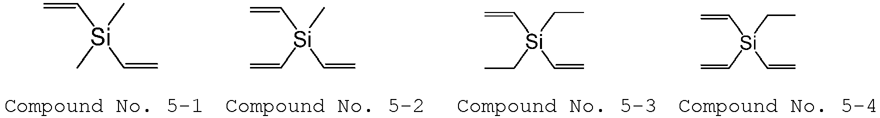

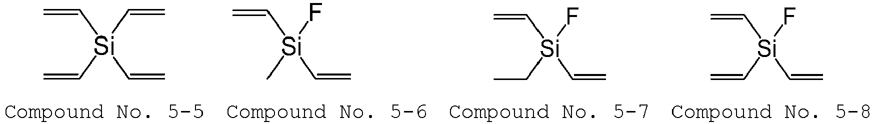

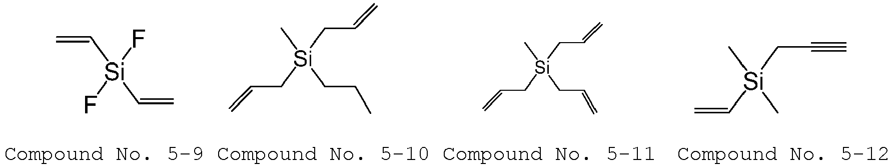

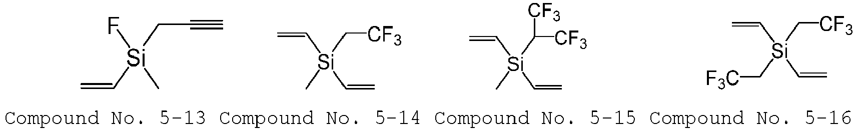

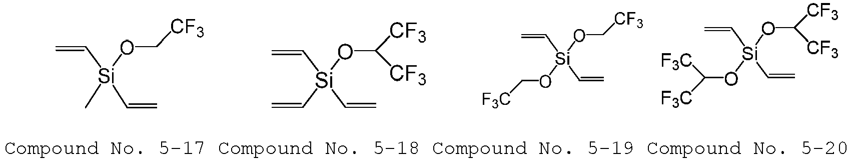

As the compound represented by the above general formula [5], among Compound Nos. 5-1 to 5-20, Compound Nos. 5-1, 5-2, 5-3, 5-4, 5-5, 5-6, 5-8, 5-9, 5-12, 5-17, 5-18 and 5-20 are more preferable from the viewpoint of improving durability at high temperatures, and Compound Nos. 5-2, 5-4, 5-5, 5-8 and 5-18 are particularly preferable.

The compound represented by the above general formula [5] is preferably highly purified by general purification operation. In particular, the Cl (chlorine) content of the compound as a raw material before being dissolved in an electrolyte solution is preferably 5000 mass ppm or less, more preferably 1000 mass ppm or less, and still more preferably 100 mass ppm or less. The presence of Cl (chlorine) remaining at a high concentration is not preferable in that it tends to corrode the battery members.

Similarly, the free acid content of the compound as a raw material before being dissolved in an electrolyte solution is preferably 5000 mass ppm or less, more preferably 1000 mass ppm or less, and still more preferably 100 mass ppm or less. The presence of a free acid remaining at a high concentration is not preferable in that it tends to corrode the battery members.

Purification operation can be carried out in order to obtain a high-purity compound represented by the above general formula [5] or to bring the chlorine or free acid content into the above range.

The purification operation is not particularly limited so long as it is general operation in organic syntheses, and specific examples thereof can include washing, separation, concentration, distillation, activated carbon treatment, and column chromatography.

The compound represented by the above general formula [5] can be produced, for example, as described in JP-A-H10-139784, Journal of Organic Chemistry (1957), 22, 1200-2., or Chemicke Zvesti (1964), 18, 21-7, by reacting a silicon compound having a silanol group or a hydrolyzable group with a carbon-carbon unsaturated bond-containing organometallic reagent, so as to replace the silanol group or the hydrolyzable group in the silicon compound with a carbon-carbon unsaturated bond group, and thus producing a carbon-carbon unsaturated bond-containing silicon compound.

In addition, as the second additive, difluoro(oxalato)borate, bis(oxalato)borate, tetrafluoro(oxalato)phosphate, difluorobis(oxalato)phosphate, tris(oxalato)phosphate, difluorophosphate, or fluorosulfonate can also be used. These compounds can also be used in combination with the first additive to improve high temperature storage characteristics and low temperature characteristics.

Regarding the content of the second additive (II) above, the preferable lower limit is 0.005 mass% or more, preferably 0.05 mass% or more, and more preferably 0.1 mass% or more, and, the preferable upper limit is 12.0 mass% or less, preferably 10.0 mass% or less, and more preferably 5.0 mass% or less with respect to the total amount of the components (I) to (IV) above.

When the content is 0.005 mass% or more, the effect of improving the battery characteristics tends to be easily obtained. When the content is 12.0 mass% or less, the characteristic deterioration at low temperatures due to the increased viscosity of the electrolyte solution is unlikely to occur.

The content of the second additive (II) above is preferably in the range not exceeding 12.0 mass%, and the second additive may be used alone, or two or more thereof may be mixed and used in any combination and at any ratio according to the intended use.

### Nonaqueous organic solvent (III)

The type of nonaqueous organic solvent (III) is not particularly limited, and any nonaqueous organic solvent can be used. Specific examples thereof include cyclic carbonates such as propylene carbonate (hereinafter, may be referred to as "PC"), ethylene carbonate (hereinafter, may be referred to as "EC") and butylene carbonate, chain carbonates such as diethyl carbonate (hereinafter, may be referred to as "DEC"), dimethyl carbonate (hereinafter, may be referred to as "DMC"), and ethylmethyl carbonate (hereinafter, may be referred to as "EMC"), cyclic esters such as γ-butyrolactone and γ-valerolactone, chain esters such as methyl acetate, methyl propionate, and ethyl propionate (hereinafter, may be referred to as "EP"), cyclic ethers such as tetrahydrofuran, 2-methyl tetrahydrofuran, and dioxane, chain ethers such as dimethoxyethane and diethyl ether, and sulfone compounds and sulfoxide compounds such as dimethyl sulfoxide and sulfolane. In addition, ionic liquids and the like can also be included herein. Further, the nonaqueous organic solvent to be used in the present invention may be used alone, or two or more types thereof may be used in any combination and at any ratio according to the intended use. Of them, from the viewpoint of electrochemical stability against oxidation-reduction and chemical stability against heat and reaction with the above solutes, particularly propylene carbonate, ethylene carbonate, diethyl carbonate, dimethyl carbonate, ethyl methyl carbonate, methyl propionate and ethyl propionate are preferable.

For example, it is preferable that the nonaqueous organic solvent contains one or more cyclic carbonates having a high dielectric constant and one or more chain carbonates or chain esters having a low liquid viscosity, in that the ionic conductivity of the electrolyte solution increases. Specifically, the following combinations are much preferable.

(1) Combination of EC and EMC,
(2) Combination of EC and DEC,
(3) Combination of EC, DMC and EMC,
(4) Combination of EC, DEC and EMC,
(5) Combination of EC, EMC and EP,
(6) Combination of PC and DEC,
(7) Combination of PC and EMC,
(8) Combination of PC and EP,
(9) Combination of PC, DMC and EMC,
(10) Combination of PC, DEC and EMC,
(11) Combination of PC, DEC and EP,
(12) Combination of PC, EC and EMC,
(13) Combination of PC, EC, DMC and EMC,
(14) Combination of PC, EC, DEC and EMC,
(15) Combination of PC, EC, EMC and EP

### Solute (IV)

Specific examples of the solute to be used in the nonaqueous electrolyte solution of the present invention include, in the case of a lithium battery and a lithium ion battery, electrolyte salts represented by LiPF₆, LiBF₄, LiSbF₆, LiAsF₆, LiClO₄, LiCF₃SO₃, LiC₄F₉SO₃, LiAlO₂, LiAlCl₄, LiCl, LiI, LiC(CF₃SO₂)₃, LiPF₃(C₃F₇)₃, LiB(CF₃)₄, and LiBF₃(C₂F₅) and, in the case of sodium ion batteries, electrolyte salts represented by NaPF₆, NaBF₄, NaSbF₆, NaAsF₆, NaClO₄, NaCF₃SO₃, NaC₄F₉SO₃, NaAlO₂, NaAlCl₄, NaCl, NaI, NaC (CF₃SO₂)₃, NaPF₃(C₃F₇)₃, NaB(CF₃)₄, and NaBF₃(C₂F₅). The solute may be used alone, or two or more thereof may be used in any combination and ratio according to the intended use. Above all, considering the energy density, output characteristics, life, etc. of the resultant battery, in the case of a lithium battery and a lithium ion battery, at least LiPF₆ is preferably contained as the solute (IV). When LiPF₆ and the other solutes (IV) than this are used in combination, at least one component selected from the group consisting of LiBF₄, LiSbF₆, LiAsF₆, LiClO₄, LiCF₃SO₃, LiC₄F₉SO₃, LiAlO₂, LiAlCl₄, LiCl, and LiI is preferably used, as the other solute (IV).

Further, in the case of a sodium ion battery, at least NaPF₆ is preferably contained as a solute (IV). When NaPF₆ and the other solute (IV) than this are used in combination, at least one component selected from the group consisting of NaBF₄, NaSbF₆, NaAsF₆, NaClO₄, NaCF₃SO₃, NaC₄F₉SO₃, NaAlO₂, NaAlCl₄, NaCl, and NaI is preferably used, as the other solute (IV).

The concentration of the solute (IV) is not particularly limited, but the preferable lower limit of the concentration of the solute in the nonaqueous electrolyte solution is 0.5 mol/L or more, preferably 0.7 mol/L or more, and more preferably 0.9 mol/L or more, and the preferable upper limit is 2.5 mol/L or less, preferably 2.0 mol/L or less, and more preferably 1.5 mol/L or less.

The liquid temperature at which the solute is dissolved in a nonaqueous organic solvent is not particularly limited, but ranges from preferably -20°C to 80°C, more preferably 0°C to 60°C.

### Other additives or components

The basic construction of the nonaqueous electrolyte solution of the present invention is as described above, but an additive that is generally used for the nonaqueous electrolyte solution of the present invention may also be added in any ratio so long as the gist of the present invention is not impaired.

Specific examples thereof include compounds having an overcharge prevention effect, an effect of forming negative electrode film, and a positive electrode protection effect such as vinylene carbonate (hereinafter may be referred to as "VC"), oligomer of vinylene carbonate (number average molecular weight in terms of polystyrene ranges from 170 to 5000), vinylethylene carbonate, fluoroethylene carbonate (hereinafter may be referred to as "FEC"), 1,6-diisocyanatohexane, ethynylethylene carbonate, trans-difluoroethylene carbonate, propanesultone, propenesultone, 1,3,2-dioxathiolane-2,2-dioxide, 4-propyl-1,3,2-dioxathiolane-2,2-dioxide, methylenemethanedisulfonate, 1,2-ethanedisulfonic acid anhydride, methanesulfonylfluoride, tris(trimethylsilyl)borate, succinonitrile, (ethoxy)pentafluorocyclotriphosphazene, lithium tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, t-butylbenzene, t-amylbenzene, fluorobenzene, cyclohexylbenzene, biphenyl, difluoroanisole, and dimethylvinylene carbonate.

Further, carboxylates such as lithium acrylate, sodium acrylate, lithium methacrylate and sodium methacrylate, sulfate ester salts such as lithium methyl sulfate, sodium methyl sulfate, lithium ethyl sulfate, or sodium methyl sulfate may be added.

It is also possible to use a nonaqueous electrolyte solution pseudo-solidified with a gelling agent or a crosslinking polymer, as in the case of being used in a nonaqueous electrolyte solution secondary battery called a lithium polymer battery.

Further, the nonaqueous electrolyte solution of the present invention can be prepared in such a manner that depending on the required characteristics, a plurality of the above solutes (IV) (lithium salt, sodium salt) and the salts having imide anions (lithium salt, sodium salt) as the second additive (II) represented by the general formulae [2] to [4], difluoro(oxalato)borate, bis(oxalato)borate, tetrafluoro(oxalato)phosphate, difluorobis(oxalato)phosphate, tris(oxalato)phosphate, difluorophosphate, and fluorosulfonate (all of them are lithium salts and sodium salts) may be used in combination so that the total number of types of alkali metal salts is 4 or more.

For example, in the case where 4 types of lithium salts are contained as the above components (II) and (IV), it can be considered that LiPF₆ is used as a first solute, one type from LiBF₄, LiSbF₆, LiAsF₆, LiClO₄, LiCF₃SO₃, LiC₄F₉SO₃, LiAlO₂, LiAlCl₄, LiCl and LiI, etc., is used as a second solute, and 2 types from lithium salts having imide anions represented by the general formulae [2] to [4], lithium difluoro(oxalato) borate (hereinafter, may be referred to as "LiBF₂(C₂O₄)") , lithium bis(oxalato) borate (hereinafter, "LiB(C₂O₄)₂"), lithium tetrafluoro(oxalato)phosphate (hereinafter may be referred to as "LiPF₄(C₂O₄)"), lithium difluorobis(oxalato)phosphate (hereinafter referred to as "LiPF₂(C₂O₄)₂"), lithium tris(oxalato)phosphate (hereinafter may be referred to as "LiP(C₂O₄)₃"), lithium difluorophosphate (hereinafter, may be referred to as "LiPO₂F₂") and lithium fluorosulfonate (hereinafter, may be referred to as "LiSO₃F") are used as a second additive; or LiPF₆ is used as a first solute, and 3 types of lithium salts having imide anions represented by the above general formulae [2] to [4], LiBF₂(C₂O₄), LiB(C₂O₄)₂, LiPF₄(C₂O₄), LiPF₂(C₂O₄)₂, LiP(C₂O₄)₃, LiPO₂F₂, and LiSO₃F are used.

Specifically, it is preferable that when 4 types of lithium salts are used as in the following (1) to (6),
(1) a combination of LiPF₆, a Li salt of Compound No. 2-1, a Li salt of Compound No. 2-6, and LiPF₂(C₂O₄)₂,
(2) a combination of LiPF₆, LiBF₄, a Li salt of Compound No. 2-1, and LiPO₂F₂,
(3) a combination of LiPF₆, a Li salt of Compound No. 2-1, a Li salt of Compound No. 3-1, and LiPO₂F₂,
(4) a combination of LiPF₆, a Li salt of Compound No. 3-1, LiPF₂(C₂O₄)₂, and LiPO₂F₂,
(5) a combination of LiPF₆, a Li salt of Compound No. 3-1, LiB(C₂O₄)₂ and LiPO₂F₂,
(6) a combination of LiPF₆, a Li salt of Compound No. 4-1, LiPF₂(C₂O₄)₂ and LiPO₂F₂,
an increase in internal resistance at low temperatures is suppressed. The above combinations are examples, and of course, any combinations other than the above combinations may be used. Further, if necessary, the additives other than the above mentioned additives may be further added.

Further, as the components (I) and (IV) above, the total number of types of the alkali metal salts may be 5 or more.

For example, as the components (I) and (IV) above, it can be considered that LiPF₆ is used as a first solute, one type of the second solute is used, and 3 types from lithium salts having imide anions represented by the above general formulae [2] to [4], LiBF₂(C₂O₄), LiB (C₂O₄)₂, LiPF₄(C₂O₄), LiPF₂(C₂O₄)₂, LiP(C₂O₄)₃, LiPO₂F₂ and LiSO₃F are used; or that LiPF₆ is used as a first solute, and 4 types from lithium salts having imide anions represented by the above general formulae [2] to [4], LiBF₂ (C₂O₄), LiB (C₂O₄)₂, LiPF₄(C₂O₄), LiPF₂(C₂O₄)₂, LiP(C₂O₄)₃, LiPO₂F₂, and LiSO₃F are used.

Specifically, it is preferable to use 5 types of lithium salts listed as the following combinations (1) to (10),
(1) a combination of LiPF₆, a Li salt of Compound No. 2-1, a Li salt of Compound No. 2-6, LiPF₄(C₂O₄), and LiPF₂(C₂O₄)₂,
(2) a combination of LiPF₆, LiBF₄, a Li salt of Compound No. 2-1, LiB (C₂O₄)₂, and LiPO₂F₂,
(3) a combination of LiPF₆, a Li salt of Compound No. 2-1, LiBF₂(C₂O₄), LiPO₂F₂, and LiSO₃F,
(4) a combination of LiPF₆, a Li salt of Compound No. 2-1, a Li salt of Compound No. 3-1, LiB (C₂O₄)₂ and LiPO₂F₂,
(5) a combination of LiPF₆, a Li salt of Compound No. 3-1, LiPF₄(C₂O₄), LiPF₂(C₂O₄)₂, and LiPO₂F₂,
(6) a combination of LiPF₆, a Li salt of Compound No. 3-1, a Li salt of Compound No. 3-4, LiPF₄(C₂O₄), and LiPF₂(C₂O₄)₂,
(7) a combination of LiPF₆, a Li salt of Compound No. 3-1, a Li salt of Compound No. 4-1, LiPF₂(C₂O₄)₂, and LiSO₃F,
(8) a combination of LiPF₆, a Li salt of Compound No. 4-1, LiPF₄(C₂O₄), LiPF₂(C₂O₄)₂, and LiPO₂F₂,
(9) a combination of LiPF₆, a Li salt of Compound No. 4-1, a Li salt of Compound No. 4-5, LiBF₂(C₂O₄), and LiPO₂F₂,
(10) a combination of LiPF₆, a Li salt of Compound No. 4-6, LiB (C₂O₄)₂, LiPO₂F₂, and LiSO₃F,
in order to further strengthen the effect of suppressing gas generation at high temperatures. The above combinations are examples, and of course, any combinations other than the above combinations may be used. If necessary, lithium salts other than the above additives may be further added in combination.

### 2. Nonaqueous electrolyte solution secondary battery

The structure of the nonaqueous electrolyte solution secondary battery of the present invention will be described. The nonaqueous electrolyte solution secondary battery of the present invention is characterized by using the above-mentioned nonaqueous electrolyte solution of the present invention, and other constituent members to be used herein are those used in general nonaqueous electrolyte solution secondary batteries.

The nonaqueous electrolyte solution secondary battery may be a nonaqueous electrolyte solution secondary battery comprising (a) the above nonaqueous electrolyte solution, (b) a positive electrode, (c) a negative electrode, and (d) a separator as described below.

### [(b) Positive electrode]

The positive electrode (b) preferably contains at least one oxide and/or polyanion compound as a positive electrode active material.

### [Positive electrode active material]

In the case of a lithium ion secondary battery in which the cation in the nonaqueous electrolyte solution is mainly lithium, the positive electrode active material constituting the positive electrode (b) is not particularly limited so long as it is one of various materials capable of charging and discharging. An example thereof is the one containing at least one of (A) a lithium transition metal composite oxide containing at least one metal of nickel, manganese, and cobalt and having a layered structure, (B) a lithium manganese composite oxide having a spinel structure, (C) a lithium-containing olivine-type phosphate and (D) a lithium rich layered transition metal oxide having a layered rock salt-type structure.

### ((A) Lithium transition metal composite oxide)

### Positive electrode active material (A)

Examples of the lithium transition metal composite oxide containing at least one metal of nickel, manganese and cobalt, and having a layered structure include lithium-cobalt composite oxide, lithium-nickel composite oxide, lithium-nickel-cobalt composite oxide, lithium-nickel-cobalt-aluminum composite oxide, lithium-cobalt-manganese composite oxide, lithium-nickel-manganese composite oxide, and lithium-nickel-manganese-cobalt composite oxide. Further, a lithium transition metal composite oxide, in which a part of the transition metal atoms as the main constituents of these lithium transition metal composite oxides are replaced with other elements such as Al, Ti, V, Cr, Fe, Cu, Zn, Mg, Ga, Zr, Si, B, Ba, Y, and Sn, may also be used.

Specific examples of the lithium-cobalt composite oxide and the lithium-nickel composite oxide, which may be used herein, include LiCoO₂, LiNiO₂, lithium cobaltate to which another element such as Mg, Zr, Al and Ti is added (e.g., LiCo_{0.98}Mg_{0.01}Zr_{0.01}O₂, LiCo_{0.98}Mg_{0.01}Al_{0.01}O₂, LiCo_{0.975}Mg_{0.01}Zr_{0.005}Al_{0.01}O₂), and lithium cobaltate having a rare earth compound fixed on the surface as described in WO2014/034043. Further, as described in JP-A-2002-151077, LiCoO₂ particle powder of which particle surface is partially covered with aluminum oxide may also be used.

The lithium-nickel-cobalt composite oxide and the lithium-nickel-cobalt-aluminum composite oxide are represented by the general formula (6).

LiₐNi_{1-b-c}Co_{b}M¹_{c}O₂ (6)

In the formula (6), M¹ is at least one element selected from the group consisting of Al, Fe, Mg, Zr, Ti and B, a satisfies 0.9 ≤ a ≤ 1.2, and b and c satisfy the conditions of 0.01 ≤ b ≤ 0.3 and 0 ≤ c ≤ 0.1.

These oxides can be prepared according to, for example, the production method described in JP-A-2009-137834 and the like. Specific examples thereof include LiNi_{0.8}Co_{0.2}O₂, LiNi_{0.85}Co_{0.10}Al_{0.05}O₂, LiNi_{0.87}Co_{0.10}Al_{0.03}O₂, LiNi_{0.90}Co_{0.07}Al_{0.03}O₂, and LiNi_{0.6}Co_{0.3}Al_{0.1}O₂.

Specific examples of the lithium-cobalt-manganese composite oxide and the lithium-nickel-manganese composite oxide include LiCo_{0.5}Mn_{0.3}O₂ and LiNi_{0.5}Mn_{0.5}O₂.

Examples of the lithium-nickel-manganese-cobalt composite oxide include a lithium-containing composite oxide represented by the general formula (7).

Li_{d}NiₑMn_{f}Co_{g}M²ₕO₂ (7)

In the formula (7), M² is at least one element selected from the group consisting of Al, Fe, Mg, Zr, Ti, B and Sn, and d satisfies 0.9 ≤ d ≤ 1.2, e, f, g and h satisfy the conditions of e + f + g + h = 1, 0 ≤ e ≤ 0.9, 0 ≤ f ≤ 0.5, 0 ≤ g ≤ 0.5, and h ≤ 0.

The lithium-nickel-manganese-cobalt composite oxide preferably contains manganese in the range as represented by the general formula (7) in order to improve the structural stability and the safety at high temperatures in relation to the lithium secondary battery. In particular, in order to enhance the high rate characteristics of the lithium ion secondary battery, those further containing cobalt in the range as represented by the general formula (7) are more preferable.

Specific examples thereof include those having a charge/discharge region of 4.3 V or more, such as Li[Ni_{1/3}Mn_{1/3}Co_{1/3}]O₂, Li[Ni_{0.45}Mn_{0.35}Co_{0.2}]O₂, Li[Ni_{0.5}Mn_{0.3}Co_{0.2}]O₂, Li [Ni_{0.6}Mn_{0.2}Co_{0.2}]O₂, Li[Ni_{0.8}Mn_{0.1}Co_{0.1}]O₂, Li[Ni_{0.49}Mn_{0.3}Co_{0.2}Zr_{0.01}]O₂, Li[Ni_{0.49}Mn_{0.3}Co_{0.2}Mg_{0.01}]O₂ and Li[Ni_{0.8}Mn_{0.1}Co_{0.1}]O₂.

### ((B) Lithium-manganese composite oxide having spinel structure)

### Positive electrode active material (B)

Examples of the lithium manganese composite oxide having a spinel structure include a spinel-type lithium manganese composite oxide represented by the general formula (8) .

Liⱼ(Mn₂₋ₖM³ₖ)O₄ (8)

In the formula (8), M³ represents at least one metal element selected from the group consisting of Ni, Co, Fe, Mg, Cr, Cu, Al and Ti, and j satisfies 1.05 ≤ j ≤ 1.15 and k satisfies 0 ≤ k ≤ 0.20.

Specific examples thereof include LiMn₂O₄, LiMn_{1.95}Al_{0.05}O₄, LiMn_{1.9}Al_{0.1}O₄, LiMn_{1.9}Ni_{0.1}O₄, and LiMn_{1.5}Ni_{0.5}O₄.

### ((C) Lithium-containing olivine-type phosphate)

### Positive electrode active material (C)

Examples of the lithium-containing olivine-type phosphate include those represented by the general formula (9) .

LiFe₁₋ₙM⁴ₙPO₄ (9)

In the formula (9), M⁴ represents at least one selected from Co, Ni, Mn, Cu, Zn, Nb, Mg, Al, Ti, W, Zr and Cd, and "n" satisfies 0 ≤ n ≤ 1.

Specific examples thereof include LiFePO₄, LiCoPO₄, LiNiPO₄, and LiMnPO₄ and of them, LiFePO₄ and/or LiMnPO₄ is preferable.

### ((D) Lithium rich layered transition metal oxide)

### Positive electrode active material (D)

Examples of the lithium rich layered transition metal oxide having a layered rock salt type structure include those represented by the general formula (10).

xLiM⁵O₂·(1-x)Li₂M⁶O₃ (10)

In the formula (10), "x" is the number satisfying 0 < x < 1, M⁵ represents at least one metal element having an average oxidation number of 3⁺, M⁶ represents at least one metal element having an average oxidation number of 4⁺. In the formula (10), M⁵ represents preferably one metal element selected from trivalent Mn, Ni, Co, Fe, V and Cr, but such a metal element may be prepared to have an average oxidation number of trivalent using divalent and tetravalent metals in equal amounts.

Further, in the formula (10), M⁶ represents preferably one or more metal elements selected from Mn, Zr and Ti. Specific examples thereof include 0.5[LiNi_{0.5}Mn_{0.5}O₂]·0.5[Li₂MnO₃], 0.5[LiNi_{1/3}Co_{1/3}Mn_{1/3}O₂]·0.5[Li₂MnO₃], 0.5[LiNi_{0.375}Co_{0.25}Mn_{0.375}O₂]·0.5[Li₂MnO₃], 0.5[LiNi_{0.375}Co_{0.125}Fe_{0.125}Mn_{0.375}O₂]·0.5[Li₂MnO₃], and 0.45[LiNi_{0.375}Co_{0.25}Mn_{0.375}O₂]·0.10[Li₂TiO₃]·0.45[Li₂MnO₃].

The positive electrode active material (D) represented by the general formula (10) is known to exhibit a high capacity at a high voltage charge of 4.4 V (Li standard) or higher (for example, US Patent No. 7,135,252).

These positive electrode active materials can be prepared according to, for example, the production methods described in JP-A-2008-270201, WO2013/118661, JP-A-2013-030284, and the like.

It is sufficient that the positive electrode active material contains at least one selected from the above (A) to (D) as a main component, but examples of other materials to be contained include transition element chalcogenides such as FeS₂, TiS₂, V₂O₅, MoO₃, and MoS₂, or conductive polymers such as polyacetylene, polyparaphenylene, polyaniline, and polypyrrole, activated carbon, polymers that generate radicals, and carbon materials.

### [Positive electrode current collector]

The positive electrode (b) has a positive electrode current collector. As the positive electrode current collector, for example, aluminum, stainless steel, nickel, titanium, or alloys thereof can be used.

### [Positive electrode active material layer]

In the positive electrode (b), for example, a positive electrode active material layer is formed on at least one surface of the positive electrode current collector. The positive electrode active material layer is composed of, for example, the above-mentioned positive electrode active material, a binder, and, if necessary, a conductive agent.

Examples of the binder include polytetrafluoroethylene, polyvinylidene fluoride, and styrene butadiene rubber (SBR) resin.

As the conductive agent, for example, a carbon material such as acetylene black, ketjen black, carbon fiber, or graphite (granular graphite or flake graphite) can be used. For the positive electrode, it is preferable to use acetylene black or ketjen black having low crystallinity.

### [Negative electrode (c)]

The negative electrode (c) preferably contains at least one type of a negative electrode active material.

### [Negative electrode active material]

In the case of a lithium ion secondary battery in which cations in the nonaqueous electrolyte solution are mainly composed of lithium, the negative electrode active material constituting the negative electrode (c) can dope/dedope lithium ions. Examples thereof include those containing at least one selected from (E) a carbon material having a d-value of the lattice plane (002 plane) of 0.340 nm or less in X-ray diffraction, (F) a carbon material having a d-value of the lattice plane (002 plane) of more than 0.340 nm in X-ray diffraction, (G) an oxide of one or more metals selected from Si, Sn and Al, (H) one or more metals selected from Si, Sn and Al or alloys containing these metals, or alloys of these metals or alloys thereof with lithium, and (I) lithium titanium oxide. One type of these negative electrode active materials can be used alone, and two or more thereof can be used in combination. Further, lithium metal, metal nitride, tin compound, conductive polymer and the like may also be used.

### ((E) Carbon material having d value of the lattice plane (002 plane) of 0.340 nm or less in X-ray diffraction)

### Negative electrode active material (E)

Examples of carbon materials having a d value of the lattice plane (002 plane) of 0.340 nm or less in X-ray diffraction include pyrolytic carbon, cokes (for example, pitch coke, needle coke, petroleum coke, etc.), graphites, calcined products of organic polymer compounds (for example, products obtained by calcining phenol resin, furan resin, etc. and carbonized at an appropriate temperature), carbon fibers, and activated carbon. They may be graphitized products thereof. The carbon material has a (002) plane spacing (d002) of 0.340 nm or less as measured by an X-ray diffraction method, and among them, graphite having a true density of 1.70 g/cm³ or more, or a highly crystalline carbon material having properties close to that of the graphite is preferable.

### ((F) Carbon material having d value of the lattice plane (002 plane) exceeding 0.340 nm in X-ray diffraction) Negative electrode active material (F)

Examples of carbon material having a d value of the lattice plane (002 plane) exceeding 0.340 nm in X-ray diffraction include amorphous carbon characterized by stacking order that remains almost unchanged even when heattreated at a high temperature of 2000°C or higher. Examples thereof include non-graphitized carbon (hard carbon), mesocarbon microbeads (MCMB) calcined at 1500°C or lower, and mesophase bitch carbon fiber (MCF). Carbotron (registered trademark) P manufactured by Kureha Corporation is a typical example.

### ((G) Oxide of one or more metals selected from Si, Sn and Al)

### Negative electrode active material (G)

Examples of the oxide of one or more metals selected from Si, Sn and Al include silicon oxide and tin oxide capable of doping/de-doping lithium ions.

SiOₓ and the like have a structure in which Si ultrafine particles are dispersed in SiO₂. When this material is used as the negative electrode active material, charging and discharging are performed smoothly because Si that reacts with Li is in the form of ultrafine particles, while the SiOₓ particles themselves having the above structure have a small surface area, resulting in good coatability when used as a composition (paste) for forming the negative electrode active material layer and good adhesiveness to the current collector of the negative electrode mixture layer.

In this case, since SiOₓ has a large volume change due to charge and discharge, increased capacity and good charge/discharge cycle characteristics can be simultaneously achieved by using SiOₓ and graphite as the negative electrode active material (E) at a specific ratio in combination for the negative electrode active material.

### ((H) One or more metals selected from Si, Sn and Al or alloys containing these metals, or alloys of these metals or alloys with lithium)

### Negative electrode active material (H)

Examples of one or more metals selected from Si, Sn and Al or alloys containing these metals, or, alloys of these metals or alloys with lithium include metals such as silicon, tin and aluminum, silicon alloys, tin alloys and aluminum alloys. Materials resulting from alloying of these metals and alloys with lithium due to charge and discharge can also be used.

Preferred specific examples thereof include those described in WO2004/100293 and JP-A-2008-016424, metal substances such as silicon (Si) and tin (Sn) (for example, powdery ones), the metal alloys, compounds containing the metals, and alloys containing tin (Sn) and cobalt (Co) in the metals. The use of the metal for an electrode is preferable in that a high charge capacity can thus be exhibited and the volume expansion/contraction due to charge and discharge is relatively small. Further, these metals are known to exhibit a high charge capacity because they are alloyed with Li during charging when they are used for the negative electrode of a lithium ion secondary battery, and thus are also preferable.

Further, for example, a negative electrode active material formed of silicon pillars having a submicron diameter, a negative electrode active material made of fibers composed of silicon, and the like described in publications such as WO2004/042851 and WO2007/083155 may also be used.

### ((I) Lithium titanium oxide)

### Negative electrode active material (I)

Examples of the lithium titanium oxide can include lithium titanate having a spinel structure and lithium titanate having a ramsdellite structure.

Examples of the lithium titanate having a spinel structure can include Li_{4+α}Ti₅O₁₂ (α changes within the range of 0 ≤ α ≤ 3 due to charge/discharge reaction). Further, examples of the lithium titanate having a ramsdellite structure can include Li_{2+β}Ti₃O₇ (β changes within the range of 0 ≤ β ≤ 3 due to charge/discharge reaction). These negative electrode active materials can be prepared according to, for example, the production methods described in JP-A-2007-018883, JP-A-2009-176752, and the like.

On the other hand, in the case of a sodium-ion secondary battery in which cations in the nonaqueous electrolyte solution are mainly composed of sodium, hard carbon and oxides such as TiO₂, V₂O₅, and MoO₃ are used as the negative electrode active materials. For example, in the case of a sodium ion secondary battery in which cations in the nonaqueous electrolyte solution are mainly composed of sodium, sodium-containing transition metal composite oxides such as NaFeO₂, NaCrO₂, NaNiO₂, NaMnO₂ and NaCoO₂, those sodium-containing transition metal composite oxides wherein a mixture of a plurality of transition metals such as Fe, Cr, Ni, Ti, Mn, and Co is present in the metal composite oxides (for example, NaNi_{0.5}Ti_{0.3}Mn_{0.2}O₂), those sodium-containing transition metal composite oxides wherein a part of transition metals contained in the metal composite oxides is replaced with metals other than such transition metals, phosphoric acid compounds of transition metals such as Na₂FeP₂O₇, NaCo₃(PO₄)₂P₂O₇, sulfides such as TiS₂ and FeS₂, or conductive polymers such as polyacetylene, polyparaphenylene, polyaniline, and polypyrrole, activated carbon, polymers that generate radicals, carbon materials, and the like are used as positive electrode active materials.

### [Negative electrode current collector]

The negative electrode (c) has a negative electrode current collector. As the negative electrode current collector, for example, copper, aluminum, stainless steel, nickel, titanium, alloys thereof, or the like can be used.

### [Negative electrode active material layer]

In the negative electrode (c), for example, a negative electrode active material layer is formed on at least one surface of the negative electrode current collector. The negative electrode active material layer is composed of, for example, the above-mentioned negative electrode active material, a binder, and, if necessary, a conductive agent.

Examples of the binder include polytetrafluoroethylene, polyvinylidene fluoride, or styrene butadiene rubber (SBR) resin.

As the conductive agent, for example, a carbon material such as acetylene black, ketjen black, carbon fibers, or graphite (granular graphite or flake graphite) can be used.

### [Method for producing electrode (positive electrode (b) and negative electrode (c))]

An electrode can be obtained, for example, by dispersing and kneading an active material, a binder, and if necessary, a conductive agent in a solvent such as N-methyl-2-pyrrolidone (NMP) or water in predetermined blending amounts, applying the resultant paste to a current collector, and then drying it to form an active material layer. The resultant electrode is preferably controlled to have an appropriate density by compressing it by a method such as roll press.

### [Separator (d)]

The above-mentioned nonaqueous electrolyte solution secondary battery comprises a separator (d). As the separator for preventing contact between the positive electrode (b) and the negative electrode (c), polyolefins such as polypropylene and polyethylene, and non-woven fabrics or porous sheet made of cellulose, paper, glass fibers or the like are used. These films are preferably prepared to be microporous so that the films can be impregnated with the electrolyte solution and ions can easily permeate.

Examples of the polyolefin separator include films such as a microporous polymer film e.g., a porous polyolefin film that electrically insulates the positive electrode and the negative electrode from each other and allows lithium ions to permeate. As a specific example of the porous polyolefin film, for example, a porous polyethylene film may be used alone, or a porous polyethylene film and a porous polypropylene film may be laminated and used as a multilayer film. Another example thereof is a film obtained by combining a porous polyethylene film and a polypropylene film.

### [Packaging]

The nonaqueous electrolyte solution secondary battery can be prepared using, as a packaging of the nonaqueous electrolyte solution secondary battery, for example a coinshaped, cylindrical, square-shaped metal can, or a laminated packaging. Examples of the metal can materials include nickel-plated iron steel plate, stainless steel plate, nickel-plated stainless steel plate, aluminum or an alloy thereof, nickel, and titanium.

As the laminated packaging, for example, an aluminum laminated film, an SUS laminated film, a silica-coated polypropylene, a laminated film such as polyethylene, or the like can be used.

The structure of the nonaqueous electrolyte solution secondary battery according to the present embodiment is not particularly limited, but can be, for example, a structure in which an electrode element composed of a positive electrode and a negative electrode arranged to face each other and a nonaqueous electrolyte solution are contained in a packaging. The shape of the nonaqueous electrolyte solution secondary battery is not particularly limited, but an electrochemical device having a shape such as a coin shape, a cylinder shape, a square shape, or an aluminum laminated sheet type can be assembled using each of the above elements.

### Examples

Hereinafter, the present invention will be specifically described with reference to Examples, but the scope of the present invention is not limited to such Examples.

### <Lithium-ion battery>

### (Preparation of electrolyte solution)

### (Comparative Electrolyte solution No. 1-1)

A mixed solvent of ethylene carbonate, dimethyl carbonate and ethyl methyl carbonate having a volume ratio of 2.5:4:3.5 was used as a nonaqueous organic solvent (III). Into the mixed solvent, LiPF₆ as a solute (IV) was dissolved in such a manner that the concentration thereof is 1.0 mol/L with respect to the total amount of the nonaqueous electrolyte solution (relative to the total amount of the components (I), (III), and (IV)) and 3-(difluorophosphinyloxy)tetrahydrothiophene-1,1-dioxide represented by the above general formula [1] was dissolved as a first additive (I) in such a manner that the concentration thereof was 1.0 mass% with respect to the total amount of the nonaqueous organic solvent, the solute and the compound (relative to the total amount of the components (I), (III) and (IV)), thereby preparing Comparative Electrolyte solution No. 1-1 for a nonaqueous electrolyte solution battery. Table 1 shows the preparation conditions for Comparative Electrolyte solution No. 1-1. Hereinafter, "-" in all the tables indicates "not added".

### (Electrolyte solution No. 1-1)

A mixed solvent of ethylene carbonate, dimethyl carbonate and ethyl methyl carbonate having a volume ratio of 2.5:4:3.5 was used as a nonaqueous organic solvent (III). Into the mixed solvent, LiPF₆ was dissolved as a solute (IV) in such a manner that the concentration thereof was 1.0 mol/L with respect to the total amount of the nonaqueous electrolyte solution (relative to the total amount of the components (I) to (IV)), and 3-(difluorophosphinyloxy) tetrahydrothiophene-1,1-dioxide represented by the above general formula [1] as a first additive (I) and the lithium salt of Compound No. 2-1 represented by the above general formula [2] as a second additive (II) were dissolved in such a manner that the concentrations thereof were determined with respect to the total amount of the components (I) to (IV) shown in Table 1, respectively, thereby preparing Electrolyte solution No. 1-1.

### (Electrolyte solution Nos. 1-2 to 1-27)

Electrolyte solution Nos. 1-2 to 1-27 were prepared in the same manner as Electrolyte solution No. 1-1 except for dissolving the compounds shown in Table 1 (the counter cations of the compounds of general formulae [2] to [4] are all lithium) as a second additive (II), instead of the lithium salt of Compound No. 2-1 represented by the above general formula [2] in such a manner that the concentrations thereof were determined with respect to the total amount of the components (I) to (IV) shown in Table 1, respectively.

### (Comparative Electrolyte solution Nos. 1-2 to 1-28)

Comparative Electrolyte solution Nos. 1-2 to 1-28 were prepared in the same manner as Electrolyte solution No. 1-1, except for adding no first additive (I) and dissolving the compounds shown in Table 2 (the counter cations of the compounds of the general formulae [2] to [4] are all lithium) as a second additive (II), instead of the lithium salt of Compound No. 2-1 represented by the above general formula [2] in such a manner that the concentrations thereof were determined in respect to the total amount of the components (I) to (IV) shown in Table 2, respectively.

**[Table 1]**

| Electrolyte solution No. | (I) | | | | (II) | |
|---|---|---|---|---|---|---|
| | A | R^{a} | R^{b} | Concentration [mass%] | Compound | Concentration [mass%] |
| 1-1 | H | F | F | 1.0 | No. [2-1]-Li | 1.0 |
| 1-2 | | | | | No. [2-2]-Li | |
| 1-3 | | | | | No. [2-6]-Li | |
| 1-4 | | | | | No. [2-10]-Li | |
| 1-5 | | | | | No. [3-1]-Li | |
| 1-6 | | | | | No. [3-2]-Li | |
| 1-7 | | | | | No. [3-4]-Li | |
| 1-8 | | | | | No. [3-9]-Li | |
| 1-9 | | | | | No. [4-1]-Li | |
| 1-10 | | | | | No. [4-2]-Li | |
| 1-11 | | | | | No. [4-5]-Li | |
| 1-12 | | | | | No. [4-6]-Li | |
| 1-13 | | | | | No. [4-7]-Li | |
| 1-14 | | | | | No. [4-15]-Li | |
| 1-15 | | | | | No. [4-18]-Li | |
| 1-16 | | | | | No. [5-2] | 0.2 |
| 1-17 | | | | | No. [5-4] | |
| 1-18 | | | | | No. [5-5] | |
| 1-19 | | | | | No. [5-8] | |
| 1-20 | | | | | No. [5-18] | |
| 1-21 | | | | | LiBF₂(C₂O₄) | 0.5 |
| 1-22 | | | | | LiB(C₂O₄)₂ | |
| 1-23 | | | | | LiPF₄(C₂O₄) | |
| 1-24 | | | | | LiPF₂(C₂O₄)₂ | |
| 1-25 | | | | | LiP(C₂O₄)₃ | |
| 1-26 | | | | | LiPO₂F₂ | |
| 1-27 | | | | | LiSO₃F | |
| Comparative 1-1 | | | | | - | - |

**[Table 2]**

| Comparative No. | (I) | | | | (II) | |
|---|---|---|---|---|---|---|
| | A | R^{a} | R^{b} | Concentration [mass%] | Compound | Concentration [mass%] |
| 1-2 | - | | | | No. [2-1]-Li | 1.0 |
| 1-3 | | | | | No. [2-2]-Li | |
| 1-4 | | | | | No. [2-6]-Li | |
| 1-5 | | | | | No. [2-10]-Li | |
| 1-6 | | | | | No. [3-1]-Li | |
| 1-7 | | | | | No. [3-2]-Li | |
| 1-8 | | | | | No. [3-4]-Li | |
| 1-9 | | | | | No. [3-9]-Li | |
| 1-10 | | | | | No. [4-1]-Li | |
| 1-11 | | | | | No. [4-2]-Li | |
| 1-12 | | | | | No. [4-5]-Li | |
| 1-13 | | | | | No. [4-6]-Li | |
| 1-14 | | | | | No. [4-7]-Li | |
| 1-15 | | | | | No. [4-15]-Li | |
| 1-16 | | | | | No. [4-18]-Li | |
| 1-17 | | | | | No. [5-2] | 0.2 |
| 1-18 | | | | | No. [5-4] | |
| 1-19 | | | | | No. [5-5] | |
| 1-20 | | | | | No. [5-8] | |
| 1-21 | | | | | No. [5-18] | |
| 1-22 | | | | | LiBF₂(C₂O₄) | 0.5 |
| 1-23 | | | | | LiB(C₂O₄)₂ | |
| 1-24 | | | | | LiPF₄(C₂O₄) | |
| 1-25 | | | | | LiPF₂(C₂O₄)₂ | |
| 1-26 | | | | | LiP(C₂O₄)₃ | |
| 1-27 | | | | | LiPO₂F₂ | |
| 1-28 | | | | | LiSO₃F | |

### (Electrolyte solution No. 2-1)

A mixed solvent of ethylene carbonate, dimethyl carbonate and ethyl methyl carbonate having a volume ratio of 2:4:4 was used as a nonaqueous organic solvent (III) . Into the mixed solvent, LiPF₆ was dissolved as a solute (IV) in such a manner that the concentration thereof was 1.0 mol/L with respect to the total amount of the nonaqueous electrolyte solution (relative to the total amount of the components (I) to (IV)), 3-(difluorophosphinyloxy)tetrahydrothiophene-1,1-dioxide represented by the above general formula [1] was dissolved as a first additive (I) in such a manner that the concentration thereof was 0.5 mass% with respect to the total amount of the components (I) to (IV), and the lithium salt of Compound No. 3-1 represented by the above general formula [3] was dissolved as a second additive (II) in such a manner that the concentration thereof was 1.5 mass% with respect to the total amount of the components (I) to (IV), thereby preparing Electrolyte solution No. 2-1. Table 3 shows the preparation conditions for Electrolyte solution No. 2-1.

### (Electrolyte solution Nos. 2-2 to 2-11)

Electrolyte solution Nos. 2-2 to 2-11 were prepared in the same manner as Electrolyte solution No. 2-1 except for using each of the compounds having A, R^{a} and R ^{b} shown in Table 3 in the general formula [1] as a first additive (I), instead of 3-(difluorophosphinyloxy)tetrahydrothiophene-1,1-dioxide represented by the above general formula [1].

### (Comparative Electrolyte solution Nos. 2-1 to 2-11)

Comparative Electrolyte solution Nos. 2-1 to 2-11 were prepared in the same manner as Electrolyte solution No. 2-1, except for adding no second additive (II) and using each of the compounds having A, R^{a} and R ^{b} shown in Table 3 as a first additive (I), instead of 3-(difluorophosphinyloxy)tetrahydrothiophene-1,1-dioxide represented by the above general formula [1].

**[Table 3]**

| Electrolyte solution No. | (I) | | | | (II) | |
|---|---|---|---|---|---|---|
| | A | R^{a} | R^{b} | Concentr ation [mass%] | Compou nd | Concentrati on [mass%] |
| 2-1 | H | F | F | 0.5 | No. [3-1]-Li | 1.5 |
| 2-2 | H | OCH₃ | OCH₃ | | | |
| 2-3 | H | OCH₂CH₃ | OCH₂CH₃ | | | |
| 2-4 | H | OCH₂CF₃ | OCH₂CF₃ | | | |
| 2-5 | H | OPh | OPh | | | |
| 2-6 | H | OCH₂CH=CH₂ | OCH₂CH=C H₂ | | | |
| 2-7 | H | CH=CH₂ | CH=CH₂ | | | |
| 2-8 | H | F | OCH₂CF₃ | | | |
| 2-9 | F | OCH₃ | OCH₃ | | | |
| 2-10 | F | OPh | OPh | | | |
| 2-11 | F | OCH₂CF₃ | OCH₂CF₃ | | | |
| Comparative 2-1 | H | F | F | 0.5 | - | - |
| Comparative 2-2 | H | OCH₃ | OCH₃ | | | |
| Comparative 2-3 | H | OCH₂CH₃ | OCH₂CH₃ | | | |
| Comparative 2-4 | H | OCH₂CF₃ | OCH₂CF₃ | | | |
| Comparative 2-5 | H | OPh | OPh | | | |
| Comparative 2-6 | H | OCH₂CH=CH₂ | OCH₂CH=C H₂ | | | |
| Comparative 2-7 | H | CH=CH₂ | CH=CH₂ | | | |
| Comparative 2-8 | H | F | OCH₂CF₃ | | | |
| Comparative 2-9 | F | OCH₃ | OCH₃ | | | |
| Comparative 2-10 | F | OPh | OPh | | | |
| Comparative 2-11 | F | OCH₂CF₃ | OCH₂CF₃ | | | |

### (Electrolyte solution No.3-1)

A mixed solvent of propylene carbonate, ethylene carbonate, dimethyl carbonate, and ethyl methyl carbonate having a volume ratio of 1:2:4:3 was used as a nonaqueous organic solvent (III). Into the mixed solvent, LiPF₆ was dissolved as a solute (IV) in such a manner that the concentration thereof was 1.0 mol/L (relative to the total amount of the components (I) to (IV)) with respect to the total amount of the nonaqueous electrolyte solution, 3-(difluorophosphinyloxy)tetrahydrothiophene-1,1-dioxide represented by the above general formula [1] was dissolved as a first additive (I) in such a manner that the concentration thereof was 0.05 mass% with respect to the total amount of the components (I) to (IV), the lithium salt of Compound No. 2-1 represented by the above general formula [2] was dissolved as a second additive (II) in such a manner that the concentration thereof was 2.5 mass% with respect to the total amount of the components (I) to (IV), and as another additive or component, vinylene carbonate was dissolved in such a manner that the concentration thereof was 1.0 mass% with respect to the total amount of the electrolyte solution, thereby preparing Electrolyte solution No. 3-1. Table 4 shows the preparation conditions for Electrolyte solution No. 3-1.

### (Electrolyte solution Nos.3-2 to 3-6)

Electrolyte solution Nos. 3-2 to 3-6 were prepared in the same manner as Electrolyte solution No. 3-1 except for dissolving 3-(difluorophosphinyloxy)tetrahydrothiophene-1,1-dioxide represented by the above general formula [1] as a first additive (I) in such a manner that the concentration thereof was as shown in Table 4 and for dissolving the lithium salt of Compound No. 2-1 represented by the above general formula [2] as a second additive in such a manner that the concentration thereof was as shown in Table 4.

### (Electrolyte solution Nos.3-7 to 3-53)

Electrolyte solution Nos. 3-7 to 3-53 were prepared in the same manner as Electrolyte solution No. 3-1, except for dissolving 3-(difluorophosphinyloxy)tetrahydrothiophene-1,1-dioxide represented by the above general formula [1] as the first additive (I) in such a manner that the concentration thereof was as shown in Tables 4 to 6, and dissolving the compounds shown in Tables 4 to 6 (the counter cations of the compounds of the general formulae [2] to [4] are all lithium) as a second additive (II), instead of the lithium salt of Compound No. 2-1 represented by the above general formula [2] in such a manner that the concentrations were as shown in Tables 4 to 6, respectively.

### (Comparative Electrolyte solution Nos. 3-1 to 3-9)

Comparative Electrolyte solution Nos. 3-1 to 3-9 were prepared in the same manner as Electrolyte solution No. 3-1 except for adding no first additive (I) and dissolving the compounds shown in Tables 4 to 6 (the counter cations of the compounds of the general formulae [2] to [4] are all lithium) as a second additive (II) in such a manner that the concentrations were as shown in Tables 4 to 6, respectively.

### (Comparative Electrolyte solution No. 3-10)

Comparative Electrolyte solution No. 3-10 was prepared in the same manner as Electrolyte solution No. 3-35 except for adding no second additive (II).

**[Table 4]**

| Electrolyte solution No. | (I) | | | | (II) | |
|---|---|---|---|---|---|---|
| | A | R^{a} | R^{b} | Concentration [mass%] | Compound | Concentration [mass%] |
| Comparative 3-1 | - | | | | No. [2-1]-Li | 2.5 |
| 3-1 | H | F | F | 0.05 | | |
| 3-2 | | | | 0.1 | | |
| 3-3 | | | | 0.5 | | |
| 3-4 | | | | 1.0 | | |
| 3-5 | | | | 2.0 | | |
| 3-6 | | | | 5.0 | | |
| Comparative 3-2 | - | | | | No. [3-1]-Li | 1.0 |
| 3-7 | H | F | F | 0.05 | | |
| 3-8 | | | | 0.1 | | |
| 3-9 | | | | 0.5 | | |
| 3-10 | | | | 1.0 | | |
| 3-11 | | | | 2.0 | | |
| 3-12 | | | | 5.0 | | |
| Comparative 3-3 | - | | | | No. [4-1]-Li | 2.0 |
| 3-13 | H | F | F | 0.1 | | |
| 3-14 | | | | 1.0 | | |
| 3-15 | | | | 5.0 | | |
| Comparative 3-4 | - | | | | LiBF₂(C₂O₄) | 1.0 |
| 3-16 | H | F | F | 0.1 | | |
| 3-17 | | | | 1.0 | | |
| 3-18 | | | | 5.0 | | |

**[Table 5]**

| Electrolyte solution No. | (I) | | | | (II) | |
|---|---|---|---|---|---|---|
| | A | R^{a} | R^{b} | Concentration [mass%] | Compound | Concentration [mass%] |
| Comparative 3-5 | - | | | | LiB(C₂O₄)₂ | 1.5 |
| 3-19 | H | F | F | 0.1 | | |
| 3-20 | | | | 1.0 | | |
| 3-21 | | | | 5.0 | | |
| Comparative 3-6 | - | | | | LiPF₄(C₂O₄) | 1.5 |
| 3-22 | H | F | F | 0.1 | | |
| 3-23 | | | | 1.0 | | |
| 3-24 | | | | 2.0 | | |
| 3-25 | | | | 5.0 | | |
| Comparative 3-7 | - | | | | LiPF₂(C₂O₄)₂ | 1.0 |
| 3-26 | H | F | F | 0.1 | | |
| 3-27 | | | | 1.0 | | |
| 3-28 | | | | 5.0 | | |
| Comparative 3-8 | - | | | | LiPO₂F₂ | 1.0 |
| 3-29 | H | F | F | 0.1 | | |
| 3-30 | | | | 1.0 | | |
| 3-31 | | | | 5.0 | | |
| Comparative 3-9 | - | | | | LiSO₃F | 1.0 |
| 3-32 | H | F | F | 0.1 | | |
| 3-33 | | | | 1.0 | | |
| 3-34 | | | | 5.0 | | |

**[Table 6]**

| Electrolyte solution No. | (I) | | | | (II) | |
|---|---|---|---|---|---|---|
| | A | R^{a} | R^{b} | Concentration [mass%] | Compound | Concentratio n [mass%] |
| Comparative 3-10 | H | F | F | 1.0 | No. [2-1]-Li | |
| 3-35 | | | | | | 0.5 |
| 3-36 | | | | | | 1 |
| 3-37 | | | | | | 2.5 |
| 3-38 | | | | | | 5 |
| 3-39 | | | | | No. [3-1]-Li | 0.5 |
| 3-40 | | | | | | 1 |
| 3-41 | | | | | | 2 |
| 3-42 | | | | | | 5 |
| 3-43 | | | | | No. [4-6]-Li | 0.3 |
| 3-44 | | | | | | 1 |
| 3-45 | | | | | | 2 |
| 3-46 | | | | | | 3 |
| 3-47 | | | | | LiPF₂(C₂O₄)₂ | 0.5 |
| 3-48 | | | | | | 1 |
| 3-49 | | | | | | 1.5 |
| 3-50 | | | | | | 2 |
| 3-51 | | | | | LiPO₂F₂ | 0.3 |
| 3-52 | | | | | | 0.5 |
| 3-53 | | | | | | 1 |

### (Battery production)

Cells were prepared using the above electrolyte solutions, LiNi_{0.6}Co_{0.2}Mn_{0.2}O₂ as a positive electrode material and graphite as a negative electrode material, and then the high temperature storage characteristics and low temperature characteristics of the batteries were actually evaluated. Test cells were produced as follows.

LiNi_{0.6}Co_{0.2}Mn_{0.2}O₂ powder (90 mass%) was mixed with 5 mass% of polyvinylidene fluoride (hereinafter referred to as "PVDF") as a binder, and 5 mass% of acetylene black as a conductive material, and N-methylpyrrolidone (hereinafter referred to as "NMP") was further added to form a paste. This paste was applied onto an aluminum foil and dried to obtain a test positive electrode body.

Further, 90 mass% of graphite powder was mixed with 10 mass% of PVDF as a binder, and then NMP was further added thereto, to form a slurry. This slurry was applied onto a copper foil and dried at 120°C for 12 hours to prepare a test negative electrode body.

Then, a polyethylene separator was impregnated with an electrolyte solution and then a 50 mAh cell having an aluminum laminated packaging was assembled.

### [Evaluation of low temperature output characteristics]

The above cells were charged and discharged 10 times by a constant current constant voltage method under conditions of an environmental temperature of 25°C, the charge upper limit voltage of up to 4.3 V, the discharge lower limit voltage of up to 3.0 V and a current density of 0.33 mA/cm². The 10th discharge capacity was designated as discharge capacity A. After that, under an environmental temperature of -15°C, the cells were charged by the constant current constant voltage method using the charge upper limit voltage of up to 4.3 V and a current density of 0.33 mA/cm², and then discharged at a constant current with a current density of 9.5 mA/cm² up to a discharge end voltage of 3.0 V. The discharge capacity at this time was designated as discharge capacity B, and a value determined by "(discharge capacity B/discharge capacity A) x 100" was designated as a high output capacity retention rate (%), and then the low temperature output characteristics of the cells were evaluated.

### [Evaluation of low temperature input characteristics]

The above cells were charged and discharged 10 times by the constant current constant voltage method under conditions of an environmental temperature of 25°C, the charge upper limit voltage of up to 4.3 V, the discharge lower limit voltage of up to 3.0 V and a current density of 0.33 mA/cm². The 10th charge capacity was designated as charge capacity A. After that, under an environmental temperature of -15°C, the cells were charged by the constant current constant voltage method using the charge upper limit voltage of up to 4.3 V and a current density of 9.0 mA/cm². The charge capacity at this time was designated as charge capacity B, a value determined by "(charge capacity B/charge capacity A) x 100" was designated as a high input capacity retention rate (%), and then the low temperature input characteristics of the cells were evaluated.

### [Evaluation of high temperature storage characteristics (80°C durability performance)]

After the above charging and discharging, the cells were charged again with a current density of 0.33 mA/cm² to 4.3 V, and then stored at an environmental temperature of 80°C for 3 days. After that, the cells were discharged to 3.0 V with a current density of 0.33 mA/cm² at an environmental temperature of 25°C, and then charged to a charge upper limit voltage of 4.3 V by the constant current constant voltage method with a current density of 0.33 mA/cm². Further, the cells were compared and evaluated for discharge capacity when the cells were each discharged at a constant current with a current density of 0.33 mA/cm² up to a discharge end voltage of 3.0 V.

The results of Nonaqueous Electrolyte solution Nos. 1-1 to 1-15 and 1-21 to 1-27 and Comparative Nonaqueous Electrolyte solution Nos. 1-1 to 1-16 and 1-22 to 1-28 were compared. More specifically, based on the results of Comparative Example 1-1 using Comparative Nonaqueous Electrolyte solution No. 1-1, the capacity retention rate of the low temperature output characteristics thereof was designated as 100 and the absolute value of the discharge capacity of the high temperature storage characteristics was designated as 100, and the results of the other examples and comparative examples were expressed as a relative value. Tables 7 to 8 show the results.

The results of Nonaqueous Electrolyte solution Nos. 1-16 to 1-20 and Comparative Nonaqueous Electrolyte solution Nos 1-17 to 1-21 were compared. More specifically, based on the results of Comparative Example 1-1 using Comparative Nonaqueous Electrolyte solution No. 1-1, the capacity retention rate in the low temperature input characteristics was designated as 100, the absolute value of the discharge capacity in the high temperature storage characteristics was designated as 100, and the results of the other examples and comparative examples were expressed as a relative value. Table 9 shows the results.

**[Table 7]**

| | Electrolyte solution No. | Low temperature output characteristics | High temperature storage characteristics |
|---|---|---|---|
| Comparative Example 1-1 (reference) | Comparative 1-1 | 100 | 100 |
| Example 1-1 | 1-1 | 107 | 110 |
| Example 1-2 | 1-2 | 104 | 105 |
| Example 1-3 | 1-3 | 104 | 107 |
| Example 1-4 | 1-4 | 103 | 104 |
| Example 1-5 | 1-5 | 107 | 110 |
| Example 1-6 | 1-6 | 107 | 105 |
| Example 1-7 | 1-7 | 104 | 106 |
| Example 1-8 | 1-8 | 102 | 101 |
| Example 1-9 | 1-9 | 108 | 109 |
| Example 1-10 | 1-10 | 104 | 102 |
| Example 1-11 | 1-11 | 104 | 107 |
| Example 1-12 | 1-12 | 107 | 109 |
| Example 1-13 | 1-13 | 108 | 107 |
| Example 1-14 | 1-14 | 105 | 105 |
| Example 1-15 | 1-15 | 102 | 102 |
| Example 1-21 | 1-21 | 104 | 107 |
| Example 1-22 | 1-22 | 102 | 108 |
| Example 1-23 | 1-23 | 106 | 109 |
| Example 1-24 | 1-24 | 108 | 108 |
| Example 1-25 | 1-25 | 103 | 104 |
| Example 1-26 | 1-26 | 107 | 103 |
| Example 1-27 | 1-27 | 103 | 102 |

**[Table 8]**

| | Electrolyte solution No. | Low temperature output characteristics | High temperature storage characteristics |
|---|---|---|---|
| Comparative Example 1-1 (reference) | Comparative 1-1 | 100 | 100 |
| Comparative Example 1-2 | Comparative 1-2 | 101 | 100 |
| Comparative Example 1-3 | Comparative 1-3 | 98 | 97 |
| Comparative Example 1-4 | Comparative 1-4 | 98 | 102 |
| Comparative Example 1-5 | Comparative 1-5 | 101 | 98 |
| Comparative Example 1-6 | Comparative 1-6 | 102 | 98 |
| Comparative Example 1-7 | Comparative 1-7 | 101 | 97 |
| Comparative Example 1-8 | Comparative 1-8 | 98 | 101 |
| Comparative Example 1-9 | Comparative 1-9 | 98 | 98 |
| Comparative Example 1-10 | Comparative 1-10 | 101 | 102 |
| Comparative Example 1-11 | Comparative 1-11 | 101 | 99 |
| Comparative Example 1-12 | Comparative 1-12 | 98 | 102 |
| Comparative Example 1-13 | Comparative 1-13 | 102 | 101 |
| Comparative Example 1-14 | Comparative 1-14 | 99 | 98 |
| Comparative Example 1-15 | Comparative 1-15 | 97 | 99 |
| Comparative Example 1-16 | Comparative 1-16 | 95 | 97 |
| Comparative Example 1-22 | Comparative 1-22 | 100 | 101 |
| Comparative Example 1-23 | Comparative 1-23 | 96 | 102 |
| Comparative Example 1-24 | Comparative 1-24 | 97 | 102 |
| Comparative Example 1-25 | Comparative 1-25 | 101 | 103 |
| Comparative Example 1-26 | Comparative 1-26 | 100 | 103 |
| Comparative Example 1-27 | Comparative 1-27 | 102 | 99 |
| Comparative Example 1-28 | Comparative 1-28 | 100 | 98 |

**[Table 9]**

| | Electrolyte solution No. | Low temperature input characteristics | High temperature storage characteristics |
|---|---|---|---|
| Comparative Example 1-1 (reference) | Comparative 1-1 | 100 | 100 |
| Example 1-16 | 1-16 | 103 | 106 |
| Example 1-17 | 1-17 | 104 | 108 |
| Example 1-18 | 1-18 | 105 | 111 |
| Example 1-19 | 1-19 | 103 | 109 |
| Example 1-20 | 1-20 | 102 | 104 |
| Comparative Example 1-17 | Comparative 1-17 | 95 | 96 |
| Comparative Example 1-18 | Comparative 1-18 | 94 | 97 |
| Comparative Example 1-19 | Comparative 1-19 | 97 | 99 |
| Comparative Example 1-20 | Comparative 1-20 | 95 | 93 |
| Comparative Example 1-21 | Comparative 1-21 | 93 | 93 |

As can be seen from Tables 7 to 9, compared with a corresponding comparative example (e.g., Comparative Example 1-2) not containing the first additive (I), a corresponding example (e.g., Example 1-1) containing the first additive (I) represented by the above general formula [1] and at least one second additive (II) selected from the group consisting of the compounds represented by the above general formulae [2] to [5], difluoro(oxalato)borate, bis(oxalato)borate, tetrafluoro(oxalato)phosphate, difluorobis(oxalato)phosphate, tris(oxalato)phosphate, difluorophosphate, and fluorosulfonate exhibited the result that the low temperature characteristics and the high temperature storage characteristics were further improved.

Compared with Examples 1-2 to 1-4, Example 1-1 resulted in further improved low temperature output characteristics and high temperature storage characteristics. Therefore, it is particularly preferable that both R¹ and R² in the above general formula [2] represent fluorine atoms.

Compared with Examples 1-6 to 1-8, Example 1-5 exhibited low temperature output characteristics and high temperature storage characteristics that were improved in a well-balanced manner. Therefore, it is particularly preferable that R³ to R⁶ in the above general formula [3] each represents a fluorine atom.

Compared with Examples 1-10 to 1-11 and 1-13 to 1-15, Examples 1-9 and 1-12 exhibited low temperature output characteristics and high temperature storage characteristics that were improved in a well-balanced manner. Therefore, it is particularly preferable that R⁷ to R⁹ in the above general formula [4] each represents a fluorine atom, or R⁷ to R⁸ each represents a fluorine atom and R⁹ represents a trifluoromethyl group.

Compared with Examples 1-16 to 1-17 and 1-19 to 1-20, Example 1-18 exhibited further improved low temperature input characteristics and high temperature storage characteristics. Therefore, in the above general formula [5], it is preferable that a is 4, and R¹⁰ represents a group selected from the group consisting of vinyl, allyl, 1-propenyl, 2-propenyl, ethynyl, and 2-propynyl and R¹⁰ represents particularly preferably a vinyl group.

The results of Nonaqueous Electrolyte solution Nos. 2-1 to 2-11 and Comparative Nonaqueous Electrolyte solution Nos. 2-1 to 2-11 were compared. More specifically, based on each of the comparative examples wherein as the second additive (II), at least one selected from the group consisting of the compounds represented by the above general formulae [2] to [5], difluoro(oxalato)borate, bis(oxalato)borate, tetrafluoro(oxalato)phosphate, difluorobis(oxalato)phosphate, tris(oxalato)phosphate, difluorophosphate, and fluorosulfonate was not added, specifically the absolute value of the capacity retention rate of the low temperature output characteristics was designated as 100, and the absolute value of the discharge capacity of the high temperature storage characteristics was designated as 100, and thus the result of each example was expressed as a relative value. Table 10 shows the results.

**[Table 10]**

| | Electrolyte solution No. | Low temperature output characteristics | High temperature storage characteristics |
|---|---|---|---|
| Comparative Example 2-1 (reference) | Comparative 2-1 | 100 | 100 |
| Example 2-1 | 2-1 | 112 | 111 |
| Comparative Example 2-2 (reference) | Comparative 2-2 | 100 | 100 |
| Example 2-2 | 2-2 | 109 | 107 |
| Comparative Example 2-3 (reference) | Comparative 2-3 | 100 | 100 |
| Example 2-3 | 2-3 | 107 | 107 |
| Comparative Example 2-4 (reference) | Comparative 2-4 | 100 | 100 |
| Example 2-4 | 2-4 | 107 | 106 |
| Comparative Example 2-5 (reference) | Comparative 2-5 | 100 | 100 |
| Example 2-5 | 2-5 | 108 | 105 |
| Comparative Example 2-6 (reference) | Comparative 2-6 | 100 | 100 |
| Example 2-6 | 2-6 | 107 | 106 |
| Comparative Example 2-7 (reference) | Comparative 2-7 | 100 | 100 |
| Example 2-7 | 2-7 | 108 | 107 |
| Comparative Example 2-8 (reference) | Comparative 2-8 | 100 | 100 |
| Example 2-8 | 2-8 | 111 | 107 |
| Comparative Example 2-9 (reference) | Comparative 2-9 | 100 | 100 |
| Example 2-9 | 2-9 | 106 | 105 |
| Comparative Example 2-10 (reference) | Comparative 2-10 | 100 | 100 |
| Example 2-10 | 2-10 | 106 | 105 |
| Comparative Example 2-11 (reference) | Comparative 2-11 | 100 | 100 |
| Example 2-11 | 2-11 | 104 | 103 |

As can be seen from Table 10, compared with a corresponding comparative example (e.g., Comparative Example 2-1) not containing the second additive (II), a corresponding example (e.g., Example 2-1) containing the first additive (I) represented by the above general formula [1] and the second additive (II) exhibited the result that the low temperature output characteristics and the high temperature storage characteristics were further improved.

The results of Nonaqueous Electrolyte solution Nos. 3-1 to 3-34, and Comparative Nonaqueous Electrolyte solution Nos. 3-1 to 3-9 were compared. More specifically, based on each of the comparative examples in which the first additive (I) was not added, the capacity retention rate of the low temperature output characteristics was designated as 100, and the absolute value of the discharge capacity of the high temperature storage characteristics was designated as 100, and thus the result of each example is expressed as a relative value. Tables 11 and 12 show the results.

The results of Nonaqueous Electrolyte solution Nos. 3-35 to 3-53, and Comparative Nonaqueous Electrolyte solution No. 3-10 were compared. More specifically, based on Comparative Example 3-10 in which the second additive (II) was not added, the capacity retention rate of the low temperature output characteristics was designated as100, and the absolute value of the discharge capacity of the high temperature storage characteristics was designated as 100, and thus the result of each example is expressed as a relative value. Table 13 shows the results.

**[Table 11]**

| | Electrolyte solution No. | Low temperature output characteristics | High temperature storage characteristics |
|---|---|---|---|
| Comparative Example 3-1 (reference) | Comparative 3-1 | 100 | 100 |
| Example 3-1 | 3-1 | 101 | 102 |
| Example 3-2 | 3-2 | 104 | 102 |
| Example 3-3 | 3-3 | 106 | 105 |
| Example 3-4 | 3-4 | 107 | 106 |
| Example 3-5 | 3-5 | 106 | 106 |
| Example 3-6 | 3-6 | 102 | 104 |
| Comparative Example 3-2 (reference) | Comparative 3-2 | 100 | 100 |
| Example 3-7 | 3-7 | 101 | 101 |
| Example 3-8 | 3-8 | 102 | 102 |
| Example 3-9 | 3-9 | 103 | 106 |
| Example 3-10 | 3-10 | 105 | 107 |
| Example 3-11 | 3-11 | 104 | 107 |
| Example 3-12 | 3-12 | 102 | 105 |
| Comparative Example 3-3 (reference) | Comparative 3-3 | 100 | 100 |
| Example 3-13 | 3-13 | 102 | 102 |
| Example 3-14 | 3-14 | 107 | 109 |
| Example 3-15 | 3-15 | 104 | 107 |
| Comparative Example 3-4 (reference) | Comparative 3-4 | 100 | 100 |
| Example 3-16 | 3-16 | 101 | 102 |
| Example 3-17 | 3-17 | 106 | 110 |
| Example 3-18 | 3-18 | 103 | 106 |

**[Table 12]**

| | Electrolyte solution No. | Low temperature output characteristics | High temperature storage characteristics |
|---|---|---|---|
| Comparative Example 3-5 (reference) | Comparative 3-5 | 100 | 100 |
| Example 3-19 | 3-19 | 102 | 101 |
| Example 3-20 | 3-20 | 108 | 107 |
| Example 3-21 | 3-21 | 103 | 103 |
| Comparative Example 3-6 (reference) | Comparative 3-6 | 100 | 100 |
| Example 3-22 | 3-22 | 102 | 101 |
| Example 3-23 | 3-23 | 107 | 108 |
| Example 3-24 | 3-24 | 107 | 109 |
| Example 3-25 | 3-25 | 104 | 104 |
| Comparative Example 3-7 (reference) | Comparative 3-7 | 100 | 100 |
| Example 3-26 | 3-26 | 101 | 101 |
| Example 3-27 | 3-27 | 108 | 109 |
| Example 3-28 | 3-28 | 102 | 106 |
| Comparative Example 3-8 (reference) | Comparative 3-8 | 100 | 100 |
| Example 3-29 | 3-29 | 101 | 101 |
| Example 3-30 | 3-30 | 104 | 108 |
| Example 3-31 | 3-31 | 102 | 104 |
| Comparative Example 3-9 (reference) | Comparative 3-9 | 100 | 100 |
| Example 3-32 | 3-32 | 101 | 101 |
| Example 3-33 | 3-33 | 105 | 105 |
| Example 3-34 | 3-34 | 103 | 103 |

**[Table 13]**

| | Electrolyte solution No. | Low temperature output characteristics | High temperature storage characteristics |
|---|---|---|---|
| Comparative Example 3-10 (reference) | Comparative 3-10 | 100 | 100 |
| Example 3-35 | 3-35 | 102 | 102 |
| Example 3-36 | 3-36 | 104 | 103 |
| Example 3-37 | 3-37 | 107 | 109 |
| Example 3-38 | 3-38 | 110 | 112 |
| Example 3-39 | 3-39 | 103 | 102 |
| Example 3-40 | 3-40 | 106 | 107 |
| Example 3-41 | 3-41 | 105 | 105 |
| Example 3-42 | 3-42 | 103 | 104 |
| Example 3-43 | 3-43 | 103 | 102 |
| Example 3-44 | 3-44 | 106 | 107 |
| Example 3-45 | 3-45 | 107 | 108 |
| Example 3-46 | 3-46 | 105 | 108 |
| Example 3-47 | 3-47 | 105 | 105 |
| Example 3-48 | 3-48 | 107 | 108 |
| Example 3-49 | 3-49 | 108 | 108 |
| Example 3-50 | 3-50 | 106 | 108 |
| Example 3-51 | 3-51 | 103 | 103 |
| Example 3-52 | 3-52 | 105 | 105 |
| Example 3-53 | 3-53 | 106 | 105 |

As can be seen from Tables 11 to 12, compared with a corresponding comparative example (e.g., Comparative Example 3-1) not containing the first additive (I), a corresponding example (e.g., Example 3-1) containing the first additive (I) represented by the above general formula [1], and as the second additive (II), at least one selected from the group consisting of the compounds represented by the above general formulae [2] to [5], difluoro(oxalato)borate, bis(oxalato)borate, tetrafluoro(oxalato)phosphate, difluorobis(oxalato)phosphate, tris(oxalato)phosphate, difluorophosphate, and fluorosulfonate exhibited the result that the low temperature output characteristics and the high temperature storage characteristics were further improved.

That is, the content of the first additive (I) ranges from preferably 0.01 mass% to 10.0 mass%, and more preferably 0.05 mass% to 5.0 mass% with respect to the total amount of the components (I) to (IV).

Compared with Examples 3-1 to 3-2 and 3-6, Examples 3-3 to 3-5 exhibited even more improved low temperature output characteristics and high temperature storage characteristics. Therefore, the content of the above component (I) ranges from preferably 0.5 mass% to 2.0 mass% with respect to the total amount of the components (I) to (IV).

As can be seen from Table 13, compared with a comparative example (for example, Comparative Example 3-10) containing no second additive (II), an example (e.g., Example 3-35) containing the first additive (I) represented by the above general formula [1] and the second additive (II) exhibited the result that the low temperature output characteristics and the high temperature storage characteristics were further improved.

That is, the content of the second additive (II) ranges from preferably 0.005 mass% to 12.0 mass%, and more preferably 0.05 mass% to 10.0 mass% and particularly preferably 0.1 mass% to 5.0 mass% with respect to the total amount of (I) to (IV).

### <Regarding sodium ion battery>

### (Preparation of electrolyte solution)

### (Comparative Electrolyte solution No. 4-1)

A mixed solvent of propylene carbonate, ethylene carbonate, dimethyl carbonate, and ethyl methyl carbonate having a volume ratio of 2:1:4:3 was used as a nonaqueous organic solvent (III). Into the mixed solvent, NaPF₆ was dissolved as a solute (IV) in such a manner that the concentration thereof was 1.15 mol/L with respect to the total amount of the nonaqueous electrolyte solution (relative to the total amount of the components (I), (III), and (IV)) and 3-(difluorophosphinyloxy)tetrahydrothiophene-1,1-dioxide represented by the above general formula [1] was dissolved as a first additive (I) in such a manner that the concentration thereof was 1.0 mass% with respect to the total amount of the nonaqueous solvent, the solute and the compound (relative to the total amount of the components (I), (III) and (IV)), thereby preparing Comparative Electrolyte solution No. 4-1 for a nonaqueous electrolyte solution battery. Table 14 shows the preparation conditions for Comparative Electrolyte solution No. 4-1.

### (Electrolyte solution No. 4-1)

A mixed solvent of propylene carbonate, ethylene carbonate, dimethyl carbonate, and ethyl methyl carbonate having a volume ratio of 2:1:4:3 was used as a nonaqueous organic solvent (III). Into the mixed solvent, NaPF₆ was dissolved as a solute (IV) in such a manner that the concentration thereof was 1.15 mol/L with respect to the total amount of the nonaqueous electrolyte solution (relative to the total amount of the components (I) to (IV)), and 3-(difluorophosphinyloxy)tetrahydrothiophene-1,1-dioxide represented by the above general formula [1] as a first additive (I) and a sodium salt of Compound No. 2-1 represented by the above general formula [2] as a second additive (II) were dissolved in such a manner that the concentrations thereof were determined with respect to the total amount of the components (I) to (IV) shown in Table 14, respectively, thereby preparing Electrolyte solution No. 4-1.

### (Electrolyte solution Nos.4-2 to 4-25)

Electrolyte solution Nos. 4-2 to 4-25 were prepared in the same manner as the electrolyte solution No. 4-1 except for dissolving the compounds shown in Table 14 (the counter cations of the compounds of the general formulae [2] to [4] are all sodium) as the second additive (II) instead of the sodium salt of Compound No. 2-1 represented by the above general formula [2] in such a manner that the concentrations thereof were determined with respect to the total amount of the components (I) to (IV) shown in Table 14.

### (Comparative Electrolyte solution Nos. 4-2 to 4-26)

Comparative Electrolyte solution Nos. 4-2 to 4-26 were prepared in the same manner as Electrolyte solution No. 4-1 except for adding no first additive (II) and dissolving the compounds shown in Table 15 (the counter cations of the compounds of the general formulae [2] to [4] are all sodium) as a second additive (II) instead of the sodium salt of Compound No. 2-1 represented by the above general formula [2] in such a manner that the concentrations thereof were as shown in Table 15, respectively.

**[Table 14]**

| Electrolyte solution No. | (I) | | | | (II) | |
|---|---|---|---|---|---|---|
| | A | R^{a} | R^{b} | Concentration [mass%] | Compound | Concentration [mass%] |
| 4-1 | H | F | F | 1.0 | No. [2-1]-Na | 2.0 |
| 4-2 | | | | | No. [2-2]-Na | |
| 4-3 | | | | | No. [2-6]-Na | |
| 4-4 | | | | | No. [2-10]-Na | |
| 4-5 | | | | | No. [3-1]-Na | |
| 4-6 | | | | | No. [3-2]-Na | |
| 4-7 | | | | | No. [4-1]-Na | |
| 4-8 | | | | | No. [4-2]-Na | |
| 4-9 | | | | | No. [4-5]-Na | |
| 4-10 | | | | | No. [4-6]-Na | |
| 4-11 | | | | | No. [4-7]-Na | |
| 4-12 | | | | | No. [4-15]-Na | |
| 4-13 | | | | | No. [4-18]-Na | |
| 4-14 | | | | | No. [5-2] | 0.2 |
| 4-15 | | | | | No. [5-4] | |
| 4-16 | | | | | No. [5-5] | |
| 4-17 | | | | | No. [5-8] | |
| 4-18 | | | | | No. [5-18] | |
| 4-19 | | | | | NaBF₂(C₂O₄) | 2.0 |
| 4-20 | | | | | NaB(C₂O₄)₂ | 0.2 |
| 4-21 | | | | | NaPF₄(C₂O₄) | 2.0 |
| 4-22 | | | | | NaPF₂(C₂O₄)₂ | 2.0 |
| 4-23 | | | | | NaP(C₂O₄)₃ | 2.0 |
| 4-24 | | | | | NaPO₂F₂ | 0.2 |
| 4-25 | | | | | NaSO₃F | |
| Comparative 4-1 | | | | | - | - |

**[Table 15]**

| Comparative Electrolyte solution No. | (I) | | | | (II) | |
|---|---|---|---|---|---|---|
| | A | R^{a} | R^{b} | Concentration [mass%] | Compound | Concentration [mass%] |
| Comparative 4-2 | | | | | No. [2-1]-Na | |
| Comparative 4-3 | | | | | No. [2-2]-Na | |
| Comparative 4-4 | | | | | No. [2-6]-Na | |
| Comparative 4-5 | | | | | No. [2-10]-Na | |
| Comparative 4-6 | | | | | No. [3-1]-Na | |
| Comparative 4-7 | | | | | No. [3-2]-Na | |
| Comparative 4-8 | | | | | No. [4-1]-Na | |
| Comparative 4-9 | | | | | No. [4-2]-Na | 2.0 |
| Comparative 4-10 | | | | | No. [4-5]-Na | |
| Comparative 4-11 | - | | | | No. [4-6]-Na | |
| Comparative 4-12 | | | | | No. [4-7]-Na | |
| Comparative 4-13 | | | | | No. [4-15]-Na | |
| Comparative 4-14 | | | | | No. [4-18]-Na | |
| Comparative 4-15 | | | | | No. [5-2] | 0.2 |
| Comparative 4-16 | | | | | No. [5-4] | |
| Comparative 4-17 | | | | | No. [5-5] | |
| Comparative 4-18 | | | | | No. [5-8] | |
| Comparative 4-19 | | | | | No. [5-18] | |
| Comparative 4-20 | | | | | NaBF₂(C₂O₄) | 2.0 |
| Comparative 4-21 | | | | | NaB(C₂O₄)₂ | 0.2 |
| Comparative 4-22 | | | | | NaPF₄(C₂O₄) | 2.0 |
| Comparative 4-23 | | | | | NaPF₂(C₂O₄)₂ | 2.0 |
| Comparative 4-24 | | | | | NaP(C₂O₄)₃ | 2.0 |
| Comparative 4-25 | | | | | NaPO₂F₂ | 0.2 |
| Comparative 4-26 | | | | | NaSO₃F | |

### (Battery production)

Using the above electrolyte solutions, cells were produced using NaNi_{0.5}Ti_{0.3}Mn_{0.2}O₂ as a positive electrode material and hard carbon as a negative electrode material, and the high temperature storage characteristics and low temperature characteristics of the resultant batteries were actually evaluated. The test cells were produced as follows.

NaNi_{0.5}Ti_{0.3}Mn_{0.2}O₂ powder (90 mass%) was mixed with 5 mass% of PVDF as a positive electrode binder and 5 mass% of acetylene black as a conductive material, and then NMP was further added to form a paste. This paste was applied onto an aluminum foil and dried to obtain a test positive electrode body.

Further, 90 mass% of the hard carbon powder was mixed with 10 mass% of PVDF as a negative electrode binder, and then NMP was further added to form a slurry. This slurry was applied onto an aluminum foil and the resultant was dried to obtain a test negative electrode body.

Then, a polyethylene separator was impregnated with the electrolyte solution to assemble a 50 mAh cell having an aluminum laminated packaging.

### [Evaluation of low temperature output characteristics]

The above cells were charged and discharged 10 times by the constant current constant voltage method under an environmental temperature of 25°C, the charge upper limit voltage of up to 4.1 V, the discharge lower limit voltage of up to 1.5 V and a current density of 0.33 mA/cm². The 10th discharge capacity was designated as discharge capacity A. After that, under an environmental temperature of -15°C, the cells were charged by the constant current constant voltage method using the charge upper limit voltage of up to 4.1 V and a current density of 0.33 mA/cm², and then discharged at a constant current with a current density of 9.5 mA/cm² up to a discharge end voltage of 1.5 V. The discharge capacity at this time was designated as discharge capacity B, and a value determined by "(discharge capacity B/discharge capacity A) x 100" was designated as a high output capacity retention rate (%), and the low temperature output characteristics of the cells were evaluated.

### [Evaluation of low temperature input characteristics]

The above cells were charged and discharged 10 times by the constant current constant voltage method under conditions of an environmental temperature of 25°C, the charge upper limit voltage of up to 4.1 V, the discharge lower limit voltage of up to 1.5 V and a current density of 0.33 mA/cm². The 10th charge capacity was designated as charge capacity A. After that, under an environmental temperature of -15°C, the cells were charged by the constant current constant voltage method using the charge upper limit voltage of up to 4.1 V and a current density of 9.0 mA/cm². The charge capacity at this time was designated as charge capacity B, and a value determined by "(charge capacity B/charge capacity A) x 100" was designated as a high input capacity retention rate (%), and the low temperature input characteristics of the cells were evaluated.

### [Evaluation of high temperature storage characteristics (80°C durability performance)]

After the above charging and discharging, the cells were charged again to 4.1 V with a current density of 0.33 mA/cm², and then stored at an environmental temperature of 80°C for 3 days. After that, the cells were discharged to 1.5 V with a current density of 0.33 mA/cm² at an environmental temperature of 25°C, and then charged to a charge upper limit voltage of 4.1 V by the constant current constant voltage method with a current density of 0.33 mA/cm². Further, the cells were compared and evaluated for discharge capacity when the cells were discharged at a constant current with a current density of 0.33 mA/cm² up to a discharge end voltage of 1.5 V.

The results of Nonaqueous Electrolyte solution Nos. 4-1 to 4-13 and 4-19 to 4-25 and Comparative Nonaqueous Electrolyte solution Nos. 4-1 to 4-14 and 4-20 to 4-26 were compared. More specifically, based on the results of Comparative Example 4-1 using Comparative Nonaqueous Electrolyte solution No. 4-1, the capacity retention rate of the low temperature output characteristics thereof was designated as 100 and the absolute value of the discharge capacity of the high temperature storage characteristics was designated as 100, and each result of the other examples and comparative examples was expressed as a relative value. Tables 16 and 17 show the results.

The results of Nonaqueous Electrolyte solution Nos. 4-14 to 4-18 and Comparative Nonaqueous Electrolyte solution Nos. 4-15 to 4-19 were compared. More specifically, based on the results of Comparative Example 4-1 using Comparative Nonaqueous Electrolyte solution No. 4-1, the capacity retention rate of the low temperature input characteristics was designated as 100, the absolute value of the discharge capacity of the high temperature storage characteristics was designated as 100, and each result of the other examples and comparative examples was expressed as a relative value. Table 18 shows the results.

**[Table 16]**

| | Electrolyte solution No. | Low temperature output characteristics | High temperature storage characteristics |
|---|---|---|---|
| Comparative Example 4-1 (reference) | Comparative 4-1 | 100 | 100 |
| Example 4-1 | 4-1 | 106 | 110 |
| Example 4-2 | 4-2 | 106 | 106 |
| Example 4-3 | 4-3 | 104 | 109 |
| Example 4-4 | 4-4 | 104 | 104 |
| Example 4-5 | 4-5 | 110 | 108 |
| Example 4-6 | 4-6 | 105 | 108 |
| Example 4-7 | 4-7 | 109 | 111 |
| Example 4-8 | 4-8 | 104 | 104 |
| Example 4-9 | 4-9 | 104 | 109 |
| Example 4-10 | 4-10 | 108 | 112 |
| Example 4-11 | 4-11 | 104 | 107 |
| Example 4-12 | 4-12 | 103 | 105 |
| Example 4-13 | 4-13 | 103 | 104 |
| Example 4-19 | 4-19 | 105 | 112 |
| Example 4-20 | 4-20 | 102 | 103 |
| Example 4-21 | 4-21 | 105 | 108 |
| Example 4-22 | 4-22 | 107 | 108 |
| Example 4-23 | 4-23 | 104 | 105 |
| Example 4-24 | 4-24 | 104 | 102 |
| Example 4-25 | 4-25 | 102 | 102 |

**[Table 17]**

| | Electrolyte solution No. | Low temperature output characteristics | High temperature storage characteristics |
|---|---|---|---|
| Comparative Example 4-1 (reference) | Comparative 4-1 | 100 | 100 |
| Comparative Example 4-2 | Comparative 4-2 | 101 | 101 |
| Comparative Example 4-3 | Comparative 4-3 | 100 | 102 |
| Comparative Example 4-4 | Comparative 4-4 | 98 | 103 |
| Comparative Example 4-5 | Comparative 4-5 | 97 | 98 |
| Comparative Example 4-6 | Comparative 4-6 | 101 | 102 |
| Comparative Example 4-7 | Comparative 4-7 | 100 | 98 |
| Comparative Example 4-8 | Comparative 4-8 | 103 | 104 |
| Comparative Example 4-9 | Comparative 4-9 | 100 | 98 |
| Comparative Example 4-10 | Comparative 4-10 | 98 | 103 |
| Comparative Example 4-11 | Comparative 4-11 | 102 | 101 |
| Comparative Example 4-12 | Comparative 4-12 | 100 | 99 |
| Comparative Example 4-13 | Comparative 4-13 | 97 | 101 |
| Comparative Example 4-14 | Comparative 4-14 | 97 | 98 |
| Comparative Example 4-20 | Comparative 4-20 | 101 | 102 |
| Comparative Example 4-21 | Comparative 4-21 | 97 | 99 |
| Comparative Example 4-22 | Comparative 4-22 | 103 | 103 |
| Comparative Example 4-23 | Comparative 4-23 | 103 | 101 |
| Comparative Example 4-24 | Comparative 4-24 | 103 | 102 |
| Comparative Example 4-25 | Comparative 4-25 | 102 | 97 |
| Comparative Example 4-26 | Comparative 4-26 | 101 | 97 |

**[Table 18]**

| | Electrolyte solution No. | Low temperature input characteristics | High temperature storage characteristics |
|---|---|---|---|
| Comparative Example 4-1 (reference) | Comparative 4-1 | 100 | 100 |
| Example 4-14 | 4-14 | 103 | 106 |
| Example 4-15 | 4-15 | 104 | 108 |
| Example 4-16 | 4-16 | 105 | 111 |
| Example 4-17 | 4-17 | 104 | 109 |
| Example 4-18 | 4-18 | 102 | 104 |
| Comparative Example 4-15 | Comparative 4-15 | 99 | 100 |
| Comparative Example 4-16 | Comparative 4-16 | 96 | 101 |
| Comparative Example 4-17 | Comparative 4-17 | 100 | 102 |
| Comparative Example 4-18 | Comparative 4-18 | 99 | 99 |
| Comparative Example 4-19 | Comparative 4-19 | 99 | 93 |

As can be seen from Tables 16 to 18, compared with a corresponding comparative example (e.g., Comparative Example 4-2) containing no first additive (I), or the corresponding Comparative Example 4-1 containing no second additive (II), a corresponding example (e.g., Example 4-1) containing the first additive (I) and the second additive (II) exhibited the result that the low temperature characteristics and the high temperature storage characteristics were further improved.

Compared with Examples 4-2 to 4-4, Example 4-1 resulted in the low temperature output characteristics and the high temperature storage characteristics that were improved in a well-balanced manner. Therefore, both R¹ and R² in the above general formula [2] represent particularly preferably fluorine atoms.

Compared with Example 4-6, Example 4-5 resulted in the low temperature output characteristics and the high temperature storage characteristics that were improved in a well-balanced manner. Therefore, R³ to R⁶ in the above general formula [3] each represents particularly preferably a fluorine atom.

Compared with Examples 4-8 to 4-9 and 4-11 to 4-13, Examples 4-7 and 4-10 exhibited even further improved low temperature output characteristics and high temperature storage characteristics. Therefore, particularly preferably, R⁷ to R⁹ each represents a fluorine atom, or both R⁷ and R⁸ represent fluorine atoms and R⁹ represents a trifluoromethyl group in the general formula [4].

Compared with Examples 4-14 to 4-15 and 4-17 to 4-18, Example 4-16 exhibited even further improved low temperature input characteristics and high temperature storage characteristics. Therefore, in the general formula [5], "a" is preferably 4, and R¹⁰ represents preferably a group selected from the group consisting of vinyl, allyl, 1-propenyl, 2-propenyl, ethynyl, and 2-propynyl, and particularly preferably vinyl.

## Claims

1. A nonaqueous electrolyte solution, comprising;
(I) a first additive represented by the following general formula [1],
(II) at least one second additive selected from the group consisting of the compounds represented by the following general formulae [2] to [5], difluoro(oxalato)borate, bis(oxalato)borate, tetrafluoro(oxalato)phosphate, difluorobis(oxalato)phosphate, tris(oxalato)phosphate, difluorophosphate, and fluorosulfonate,
(III) a nonaqueous organic solvent, and
(IV) a solute, 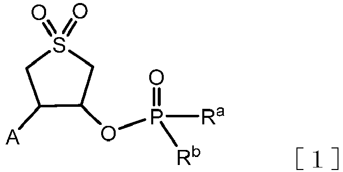
[in the formula [1],
R^{a} and R^{b} each independently represents a fluorine atom, a C₁₋₈ alkyl group which may be replaced with a halogen atom, a C₂₋₆ alkenyl group which may be replaced with a halogen atom, a C₂₋₆ alkynyl group which may be replaced with a halogen atom, a C₆₋₁₀ aryl group which may be replaced with a halogen atom, a C₁₋₈ alkoxy group which may be replaced with a halogen atom, a C₂₋₆ alkenyloxy group which may be replaced with a halogen atom, a C₂₋₆ alkynyloxy group which may be replaced with a halogen atom, or a C₆₋₁₀ aryloxy group which may be replaced with a halogen atom, and
A represents a hydrogen atom or a halogen atom.] 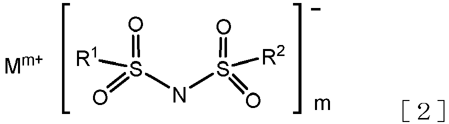
[In the formula [2],
R¹ and R² each independently represents a fluorine atom, or an organic group selected from a linear C₁₋₁₀ alkyl group or a branched C₃₋₁₀ alkyl group, a linear C₁₋₁₀ alkoxyl group or a branched C₃₋₁₀ alkoxy group, a C₂₋₁₀ alkenyl group, a C₂₋₁₀ alkenyloxy group, a C₂₋₁₀ alkynyl group, a C₂₋₁₀ alkynyloxy group, a C₃₋₁₀ cycloalkyl group, a C₃₋₁₀ cycloalkoxy group, a C₃₋₁₀ cycloalkenyl group, a C₃₋₁₀ cycloalkenyloxy group, a C₆₋₁₀ aryl group, and a C₆₋₁₀ aryloxy group, wherein a fluorine atom, an oxygen atom or an unsaturated bond may also be present in the organic group, provided that at least one of R¹ and R² represents a fluorine atom,
M^{m +} represents an alkali metal cation, an alkaline earth metal cation, or an onium cation, and
m represents an integer equal to the valence of the relevant cation.] 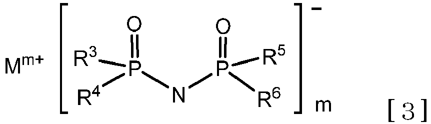
[In the formula [3],
R³ to R⁶ each independently represents a fluorine atom or an organic group selected from a linear C₁₋₁₀ alkyl group or a branched C₃₋₁₀ alkyl group, a linear C₁₋₁₀ alkoxy group or a branched C₃₋₁₀ alkoxy group, a C₂₋₁₀ alkenyl group, a C₂₋₁₀ alkenyloxy group, a C₂₋₁₀ alkynyl group, a C₂₋₁₀ alkynyloxy group, a C₃₋₁₀ cycloalkyl group, a C₃₋₁₀ cycloalkoxy group, a C₃₋₁₀ cycloalkenyl group, a C₃₋₁₀ cycloalkenyloxy group, a C₆₋₁₀ aryl group, and a C₆₋₁₀ aryloxy group, wherein a fluorine atom, an oxygen atom, a cyano group or an unsaturated bond may also be present in the organic group, provided that at least one of R³ to R⁶ represents a fluorine atom, and
M^{m +} and m represent the same as those of the general formula [2].] 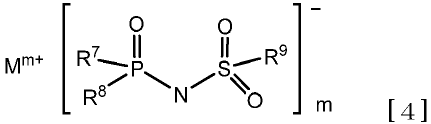
[In the formula [4],
R⁷ to R⁹ each independently represents a fluorine atom or an organic group selected from a linear C₁₋₁₀ alkyl group or a branched C₃₋₁₀ alkyl group, a linear C₁₋₁₀ alkoxy group or a branched C₃₋₁₀ alkoxy group, a C₂₋₁₀ alkenyl group, a C₂₋₁₀ alkenyloxy group, a C₂₋₁₀ alkynyl group, a C₂₋₁₀ alkynyloxy group, a C₃₋₁₀ cycloalkyl group, a C₃₋₁₀ cycloalkoxy group, a C₃₋₁₀ cycloalkenyl group, a C₃₋₁₀ cycloalkenyloxy group, a C₆₋₁₀ aryl group, and a C₆₋₁₀ aryloxy group, wherein a fluorine atom, an oxygen atom or an unsaturated bond may also be present in the organic group, provided that at least one of R⁷ to R⁹ represents a fluorine atom and
M^{m +} and m represent the same as those of the general formula [2].]
S i (R¹⁰) ₐ (R¹¹) ₄₋ₐ [5]
[In the formula [5],
R¹⁰s each independently represents a group having a carbon-carbon unsaturated bond, R¹¹s each independently represents a fluorine atom, a linear C₁₋₁₀ alkyl group or a branched C₃₋₁₀ alkyl group which may be replaced with a fluorine atom, and a linear C₁₋₁₀ alkoxy group or a branched C₃₋₁₀ alkoxy group which may be replaced with a fluorine atom, and
a is an integer from 2 to 4.]

2. The nonaqueous electrolyte solution according to claim 1, wherein in the general formula [1], R^{a} and R^{b} each independently represents a fluorine atom, a C₁₋₃ alkoxy group which may be replaced with a halogen atom, a C₂₋₄ alkenyloxy group which may be replaced with a halogen atom, a C₂₋₄ alkynyloxy group which may be replaced with a halogen atom, or a C₆₋₁₀ aryloxy group which may be replaced with a halogen atom.

3. The nonaqueous electrolyte solution according to claim 1 or 2, wherein in the general formula [1], A represents a hydrogen atom or a fluorine atom.

4. The nonaqueous electrolyte solution according to any one of claims 1 to 3, wherein in the general formula [2], both R¹ and R² represent fluorine atoms.

5. The nonaqueous electrolyte solution according to any one of claims 1 to 3, wherein in the general formula [2],
R¹ represents a fluorine atom, and
R² represents a C₆ or less alkyl group, a C₆ or less alkenyl group, a C₆ or less alkynyl group, a C₆ or less alkoxy group, a C₆ or less alkenyloxy group, or a C₆ or less alkynyloxy group, which may contain a fluorine atom.

6. The nonaqueous electrolyte solution according to any one of claims 1 to 3 and 5, wherein in the general formula [2],
R¹ represents a fluorine atom,
R² represents a group selected from a methyl group, a methoxy group, an ethyl group, an ethoxy group, an n-propyl group, an n-propoxy group, an isopropyl group, an isopropoxy group, a vinyl group, an allyl group, an allyloxy group, an ethynyl group, a 2-propynyl group, a 2-propynyloxy group, a phenyl group, a phenyloxy group, a trifluoromethyl group, a trifluoromethoxy group, a 2,2-difluoroethyl group, a 2,2-difluoroethyloxy group, a 2,2,2-trifluoroethyl group, a 2,2,2-trifluoroethyloxy group, a 2,2,3,3-tetrafluoropropyl group, a 2,2,3,3-tetrafluoropropyloxy group, a 1,1,1,3,3,3-hexafluoroisopropyl group and a 1,1,1,3,3,3-hexafluoroisopropyloxy group.

7. The nonaqueous electrolyte solution according to any one of claims 1 to 3, wherein in the general formula [3], R³ to R⁶ each represents a fluorine atom.

8. The nonaqueous electrolyte solution according to any one of claims 1 to 3, wherein in the general formula [3],
at least one of R³ to R⁶ represents a fluorine atom,
at least one of R³ to R⁶ represents a group selected from a C₆ or less alkyl group, a C₆ or less alkenyl group, a C₆ or less alkynyl group, a C₆ or less alkoxy group, a C₆ or less alkenyloxy group, and a C₆ or less alkynyloxy group, which may contain a fluorine atom.

9. The nonaqueous electrolyte solution according to any one of claims 1 to 3 and 8, wherein in the general formula [3],
at least one of R³ to R⁶ represents a fluorine atom,
at least one of R³ to R⁶ represents a group selected from a methyl group, a methoxy group, an ethyl group, an ethoxy group, an n-propyl group, an n-propoxy group, an isopropyl group, an isopropoxy group, a vinyl group, an allyl group, an allyloxy group, an ethynyl group, a 2-propynyl group, a 2-propynyloxy group, a phenyl group, a phenyloxy group, a trifluoromethyl group, a trifluoromethoxy group, a 2,2-difluoroethyl group, a 2,2-difluoroethyloxy group, a 2,2,2-trifluoroethyl group, a 2,2,2-trifluoroethyloxy group, a 2,2,3,3-tetrafluoropropyl group, a 2,2,3,3-tetrafluoropropyloxy group, a 1,1,1,3,3,3-hexafluoroisopropyl group and a 1,1,1,3,3,3-hexafluoroisopropyloxy group.

10. The nonaqueous electrolyte solution according to any one of claims 1 to 3, wherein in the general formula [4], R⁷ to R⁹ each represents a fluorine atom.

11. The nonaqueous electrolyte solution according to any one of claims 1 to 3, wherein in the general formula [4],
at least one of R⁷ to R⁹ represents a fluorine atom,
at least one of R⁷ to R⁹ represents a group selected from a C₆ or less alkyl group, a C₆ or less alkenyl group, a C₆ or less alkynyl group, a C₆ or less alkoxy group, a C₆ or less alkenyloxy group, and a C₆ or less alkynyloxy group, which may contain a fluorine atom.

12. The nonaqueous electrolyte solution according to any one of claims 1 to 3 and 11, wherein in the general formula [4],
at least one of R⁷ to R⁹ represents a fluorine atom,
at least one of R⁷ to R⁹ represents a group selected from a methyl group, a methoxy group, an ethyl group, an ethoxy group, an n-propyl group, an n-propoxy group, an isopropyl group, an isopropoxy group, a vinyl group, an allyl group, an allyloxy group, an ethynyl group, a 2-propynyl group, a 2-propynyloxy group, a phenyl group, a phenyloxy group, a trifluoromethyl group, a trifluoromethoxy group, a 2,2-difluoroethyl group, a 2,2-difluoroethyloxy group, a 2,2,2-trifluoroethyl group, a 2,2,2-trifluoroethyloxy group, a 2,2,3,3-tetrafluoropropyl group, a 2,2,3,3-tetrafluoropropyloxy group, a 1,1,1,3,3,3-hexafluoroisopropyl group and a 1,1,1,3,3,3-hexafluoroisopropyloxy group.

13. The nonaqueous electrolyte solution according to any one of claims 1 to 12, wherein in the general formulae [2] to [4],
M^{m +} is selected from the group consisting of a lithium ion, a sodium ion, a potassium ion and a tetraalkylammonium ion.

14. The nonaqueous electrolyte solution according to any one of claims 1 to 3, wherein in the general formula [5], R¹⁰s each independently represents a group selected from the group consisting of a vinyl group, an allyl group, a 1-propenyl group, a 2-propenyl group, an ethynyl group, and a 2-propynyl group.

15. The nonaqueous electrolyte solution according to any one of claims 1 to 3 and 14, wherein in the general formula [5], R¹¹s each independently represents a group selected from the group consisting of a fluorine atom, a methyl group, an ethyl group, an n-propyl group, an isopropyl group, a 2,2,2-trifluoroethyl group, a 2,2,3,3-tetrafluoropropyl group, a 1,1,1-trifluoroisopropyl group, a 1,1,1,3,3,3-hexafluoroisopropyl group, a 2,2,2-trifluoroethoxy group, a 2,2,3,3-tetrafluoropropoxy group, a 2,2,3,3,3-pentafluoropropoxy group, a 1,1,1-trifluoroisopropoxy group, and a 1,1,1,3,3,3-hexafluoroisopropoxy group.

16. The nonaqueous electrolyte solution according to any one of claims 1 to 3, 14 and 15, wherein in the general formula [5], a is 3 or 4.

17. The nonaqueous electrolyte solution according to any one of claims 1 to 3 and 14, wherein in the general formula [5], a is 4.

18. The nonaqueous electrolyte solution according to any one of claims 1 to 17, wherein the content of said first additive (I) ranges from 0.01 mass% to 10.0 mass% with respect to the total amount of said components (I) to (IV).

19. The nonaqueous electrolyte solution according to any one of claims 1 to 18, wherein the content of said second additive (II) ranges from 0.005 mass% to 12.0 mass% with respect to the total amount of said components (I) to (IV).

20. The nonaqueous electrolyte solution according to any one of claims 1 to 19, wherein said component (IV) is at least one selected from the group consisting of LiPF₆, LiBF₄, LiSbF₆, LiAsF₆, LiClO₄, LiCF₃SO₃, LiC₄F₉SO₃, LiAlO₂, LiAlCl₄, LiCl, LiI, NaPF₆, NaBF₄, NaSbF₆, NaAsF₆, NaClO₄, NaCF₃SO₃, NaC₄F₉SO₃, NaAlO₂, NaAlCl₄, NaCl, and NaI.

21. The nonaqueous electrolyte solution according to any one of claims 1 to 20, wherein said component (III) is at least one selected from the group consisting of a cyclic carbonate, a chain carbonate, a cyclic ester, a chain ester, a cyclic ether, a chain ether, a sulfone compound, a sulfoxide compound, and an ionic liquid.

22. The nonaqueous electrolyte solution according to any one of claims 1 to 21, further comprising at least one additive selected from the group consisting of vinylene carbonate, an oligomer of vinylene carbonate (having a number average molecular mass in terms of polystyrene ranging from 170 to 5000), vinylethylene carbonate, fluoroethylene carbonate, 1,6-diisocyanatohexane, ethynylethylene carbonate, trans-difluoroethylene carbonate, propanesultone, propenesultone, 1,3,2-dioxathiolane-2,2-dioxide, 4-propyl-1,3,2-dioxathiolane-2,2-dioxide, methylenemethanedisulfonate, 1,2-ethanedisulfonic acid anhydride, methanesulfonylfluoride, tris(trimethylsilyl)borate, succinonitrile, (ethoxy)pentafluorocyclotriphosphazene, lithium tetrafluoro(malonato)phosphate, tetrafluoro(picolinato)phosphate, 1,3-dimethyl-1,3-divinyl-1,3-di(1,1,1,3,3,3-hexafluoroisopropyl)disiloxane, t-butylbenzene, t-amylbenzene, fluorobenzene, and cyclohexylbenzene.

23. A nonaqueous electrolyte solution secondary battery, comprising at least a positive electrode, a negative electrode, and the nonaqueous electrolyte solution according to any one of claims 1 to 22.
